# EUROPÄISCHE PATENTSCHRIFT

(11) **EP 2 265 999 B1**
(45) Veröffentlichungstag und Bekanntmachung des Hinweises auf die Patenterteilung: **16.03.2016**
(21) Anmeldenummer: 09726915.3
(22) Anmeldetag: 02.04.2009
(51) Int. Cl.: G03H 1/04, G03H 1/28, B42D 25/328, B42D 25/41, B42D 25/425, B42D 25/45

(54) **HOLOGRAPHISCHES SICHERHEITSELEMENT SOWIE VERFAHREN ZU SEINER HERSTELLUNG**
HOLOGRAPHIC SECURITY ELEMENT AND METHOD FOR PRODUCING SAME
ÉLÉMENT DE SÉCURITÉ HOLOGRAPHIQUE ET SON PROCÉDÉ DE FABRICATION

(30) Priorität: 04.04.2008 DE 102008017652
(43) Veröffentlichungstag der Anmeldung: 29.12.2010
(73) Patentinhaber: Leonhard Kurz Stiftung & Co. KG, 90763 Fürth (DE)
(72) Erfinder: TOMPKIN, Wayne, Robert, CH-5400 Baden (CH); LUTZ, Norbert, 90607 Rückersdorf (DE); BURKHARDT, Markus, 90513 Zirndorf (DE); SCHARFENBERG, Michael, 90455 Nürnberg (DE)
(74) Vertreter: Zinsinger, Norbert
(86) Internationale Anmeldenummer: PCT/EP2009/002419
(87) Internationale Veröffentlichungsnummer: WO 2009/121602

(56) Entgegenhaltungen:
- EP-A1- 1 645 943
- EP-B1- 1 187 728
- WO-A2-03/082598
- GB-A- 2 232 927

## Beschreibung

Die Erfindung betrifft ein Sicherheitselement in Form eines mehrschichtigen Folienkörpers, welches eine Volumenhologrammschicht aufweist, sowie ein Verfahren zur Herstellung eines solchen Sicherheitselements.

Hologramme werden als Sicherheitselemente zum Schutz von Sicherheitsdokumenten wie Banknoten, Geldersatzmittel, Kreditkarten, Pässen oder ID-Dokumenten sowie zur Produktsicherung eingesetzt. Bei Massenprodukten werden häufig Oberflächenhologramme eingesetzt, durch die sich interessante optisch variable Effekte, beispielsweise Bewegungseffekte, erzielen lassen und die sich durch eine hohe Lichtstärke auszeichnen.

Volumenhologramme, auch als Weißlichthologramme bezeichnet, beruhen im Gegensatz zu Oberflächenhologrammen auf der Lichtbeugung an den Braggschen Ebenen einer transparenten Schicht, die lokale Brechzahlunterschiede aufweist.

Ein Sicherheitselement mit einem Volumenhologramm sowie die Herstellung eines solchen Sicherheitselements wird beispielsweise von der DE 10 2006 016 139 A1 beschrieben. Zur Herstellung eines Mehrschichtkörpers, welcher ein Volumenhologramm enthält, wird ein Oberflächenrelief als Master eingesetzt. Die Vorderseite des Masters wird unmittelbar oder unter Zwischenschaltung eines transparenten optischen Mediums in Kontakt mit der fotosensitiven Schicht des Mehrschichtkörpers gebracht, in der das Volumenhologramm eingezeichnet werden soll. Anschließend wird der Master mit kohärentem Licht belichtet, wobei sich durch Überlagerung des auf den Master eingestrahlten und des von dem Master gebeugten Lichts ein Interferenzmuster ausbildet, welches in der fotosensitiven Schicht als Volumenhologramm aufgezeichnet wird. Das so in die fotosensitive Schicht eingebrachte Volumenhologramm wird sodann nach Aushärtung der fotosensitiven Schicht fixiert. Durch eine spezielle Ausgestaltung des Masters lassen sich hierbei zwei oder mehr getrennte Bildinformationen in die fotosensitive Schicht einschreiben.

Weiter wird in der EP 1 187 728 B1 beschrieben, zwei Volumenhologrammschichten, in denen Bildinformationen mittels unterschiedlicher holographischer Aufzeichnungsverfahren eingeschrieben worden sind, aufeinander zu laminieren. Für den Betrachter ergibt sich so ein Gesamteindruck, der sich aus den Bildinformationen der beiden Volumenhologrammschichten zusammensetzt.

Ein Sicherheitselement und sein Herstellungsverfahren gemäß der Oberbegriffe der unabhängigen Ansprüche sind aus der WO 03/082598 A2 bekannt.

Der Erfindung liegt nun die Aufgabe zugrunde, ein verbessertes Sicherheitselement sowie ein Verfahren zu dessen Herstellung anzugeben.

Die Aufgabe der Erfindung wird von einem Sicherheitselement gemäß Anspruch 1 und von einem Verfahren zur Herstellung eines Sicherheitselements in Form eines mehrschichtigen Folienkörpers mit einer dem Betrachter zuwendenden Oberseite gemäß Anspruch 12 gelöst, bei dem ein Mehrschichtkörper umfassend eine partielle metallische Schicht und eine Replizierschicht bereitgestellt wird, wobei in einer Oberfläche der Replizierschicht eine eine zweite optisch variable Information bereitstellende Reliefstruktur abgeformt ist und in ein oder mehreren ersten Zonen des Sicherheitselements die metallische Schicht vorgesehen ist und in ein oder mehreren zweiten Zonen des Sicherheitselements die metallische Schicht nicht vorgesehen ist, bei dem auf der näher zur metallischen Schicht als zur Replizierschicht liegenden Oberfläche des Folienkörpers eine Volumenhologrammschicht aufgebracht wird, sodass die partielle metallische Schicht zwischen der Volumenhologrammschicht und der Replizierschicht angeordnet ist und bei dem die Volumenhologrammschicht von der der Volumenhologrammschicht abgewandten Seite des Mehrschichtkörpers her durch die partielle metallische Schicht hindurch zur Aufzeichnung eines Volumenhologramms in der Volumenhologrammschicht mit kohärentem Licht belichtet wird.

Durch die Erfindung wird ein nur schwer nachahmbares und dennoch günstig fertigbares Sicherheitselement bereitgestellt. Durch die Anordnung der partiellen metallischen Schicht zwischen der Volumenhologrammschicht und der Replizierschicht, in welcher die Reliefstruktur abgeformt ist, wird einerseits die optische Wirkung der unterhalb der metallischen Schicht in den ersten Zonen liegenden Bereiche der Volumenhologrammschicht unterdrückt und andererseits in diesen Zonen die optische Wirkung der Reliefstruktur zur Geltung gebracht. Damit wird ein nahtloser Übergang der in den ersten und zweiten Zonen generierten, unterschiedlichen optischen Effekte bewirkt, ohne dass die Volumenhologrammschicht und die Reliefstruktur registriert zueinander partiell aufgebracht werden müssen. Die erste und zweite Information werden hierdurch unverzerrt und mit hoher Lichtstärke in passgenau nebeneinander liegenden Bereichen generiert, wodurch sich für den Betrachter ein brillanter und eindrucksvoller optisch variabler Gesamteindruck ergibt. Dieser Eindruck lässt sich auch nicht durch ein optisches Kopierverfahren nachbilden, da der von der Volumenhologrammschicht einerseits und der von der metallischen Schicht unterlegten Replizierschicht andererseits erzeugte optisch variable Effekt jeweils nicht mittels der jeweiligen anderen Technologie nachgebildet werden kann, und sich so die die erste und die die zweite optisch variable Information generierende Strukturen gegenseitig vor Nachahmung schützen. Im Weiteren wird durch die Abfolge der Schichten eine innige Verbindung der die erste und die zweite Information bereitstellenden Strukturen erzielt, sodass der Versuch der Manipulation der einen Struktur automatisch den optischen Eindruck der anderen Struktur beeinflusst, sodass jeder Manipulationsversuch sofort erkennbar ist. Auch wird bei dem erfindungsgemäßen Verfahren eine innige Verbindung der Schichten erzielt, indem das Volumenhologramm durch die partielle metallische Schicht in der Volumenhologrammschicht eingeschrieben wird und so die partielle metallische Schicht weiter noch die Funktion einer Belichtungsmaske für das Einschreiben des Volumenhologramms erbringt. So wird zum Einen ein nachträgliches Trennen der Schichten erschwert und zum Anderen ist ein solcher Manipulationsversuch sofort erkennbar, da die Volumenhologrammschicht Bereiche aufweist, in denen kein Volumenhologramm in die Schicht eingeschrieben ist.

Weitere vorteilhafte Ausführungsformen der Erfindung sind in den Unteransprüchen bezeichnet.

Besonders vorteilhaft ist es, die Reliefstruktur in die Unterseite der Replizierschicht abzuformen und die partielle metallische Schicht unmittelbar zwischen der Replizierschicht und der Volumenhologrammschicht anzuordnen. In den ersten Zonen grenzt so die erste Oberfläche der metallischen Schicht an die Replizierschicht an und die der ersten Oberfläche gegenüberliegende zweite Oberfläche der metallischen Schicht grenzt an die Volumenhologrammschicht an. In den zweiten Zonen grenzt weiter die Replizierschicht an die Volumenhologrammschicht an.

In den ersten Zonen grenzt die Volumenhologrammschicht somit unmittelbar an die metallische Schicht an und in den zweiten Zonen unmittelbar an die Replizierschicht an, sodass ein nachträgliches Abtrennen der Volumenhologrammschicht aufgrund der sich so in den zweiten Zonen ausgebildeten Haftbrücken nur schwer möglich ist. Im Übrigen ist ein Ablöseversuch aufgrund der unterschiedlichen Haftverhalten und Haftkräften in den ersten und zweiten Zonen unmittelbar an dem sich ergebenden Oberflächenmuster zu erkennen.

Besonders vorteilhaft ist es hierbei, den Brechungsindexunterschied zwischen dem Material der Replizierschicht und dem an der Oberseite der Volumenhologrammschicht vorgesehenen Materials insbesondere durch Auswahl des für die Replizierschicht verwendeten Materials kleiner als 0,2 zu wählen, vorzugsweise den Brechungsindex dieser Materialien in etwa gleich zu wählen. Hierdurch wird erreicht, dass beim Aufbringen der Volumenhologrammschicht die in den zweiten Zonen in die Unterseite der Replizierschicht abgeformten Oberflächenstrukturen mit einem transparenten Material mit ähnlichem Brechungsindex, nämlich dem Material der Volumenhologrammschicht, gefüllt werden und damit die optische Wirkung dieser Strukturen ausgelöscht wird. Dadurch wird einerseits der Vorteil erzielt, dass eine Registrierung der die Reliefstruktur und die Replizierschicht abformenden Prozesse und der die metallische Schicht strukturierenden Prozesse nicht erfolgen muss. Weiter wird so sichergestellt, dass eventuelle, im Bereich der zweiten Zonen in der Replizierschicht abgeformte Reliefstrukturen bei der Einschreibung des Volumenholgramms in die Volumenhologrammschicht zu keinen Verzerrungen oder Verfälschungen des Aufzeichnungsergebnisses führen. Es ist so beispielsweise möglich, in die Replizierschicht vollflächig ein Oberflächenrelief abzuformen und erst in einem zweiten Schritt, beispielsweise durch die Individualisierung der metallischen Schicht mittels eines Lasers die sich für den Betrachter ergebende optisch variable Information festzulegen. Eine nachträgliche Veränderung dieser Information durch ein nachträgliches Bearbeiten der metallischen Schicht mittels eines Lasers nach Aufzeichnung des Volumenhologramms ist hierbei unmittelbar erkennbar, da bei dem gemäß dem erfindungsgemäßen Verfahren eingeschriebenen Volumenhologramm dieses Volumenhologramm nur bereichsweise in der Volumenhologrammschicht vorliegt und somit ein solcher Manipulationsversuch unmittelbar erkennbar ist.

Je nach verwendeten Materialien für die aneinander grenzende Replizierschicht und die Volumenhologrammschicht kann es fallweise vorteilhaft sein, zwischen der Replizierschicht und der Volumenhologrammschicht eine Haftvermittlerschicht anzuordnen, deren Aufgabe es ist, die Haftung dieser beiden Schichten zueinander zu verstärken bzw. eine Haftung zwischen Replizierschicht und Haftvermittlerschicht und zwischen Volumenhologrammschicht und Haftvermittlerschicht herzustellen, die stärker ist als eine direkte Haftung zwischen der Replizierschicht und der Volumenhologrammschicht. Die Haftvermittlerschicht hat dabei einen Brechungsindex, der weniger als 0,2 unterschiedlich ist zu dem Brechungsindex des Materials der Replizierschicht und zu dem Brechungsindex des an der Oberseite der Volumenhologrammschicht vorgesehenen Materials. Die Haftvermittlerschicht erzeugt dadurch keine störenden, insbesondere optischen Effekte bei der Herstellung oder bei der späteren Verwendung des Sicherheitselements.

Weiter ist es auch möglich, dass eine Individualisierung des Sicherheitselements durch Überdrucken oder durch Perforation von mehreren Schichten des Sicherheitselements durchgeführt wird. So ist es beispielsweise möglich, auf der dem Betrachter zugewandten Oberseite des Sicherheitselements einen individualisierenden Aufdruck aufzubringen, welcher sich vorzugsweise über eine Zonengrenze zwischen ein oder mehreren ersten Zonen und ein oder mehreren zweiten Zonen erstreckt. Besonders vorteilhaft ist hierbei das Aufbringen einer Individualisierungs-Information mittels Intaglio-Druck durchzuführen, da hierdurch sowohl die in der Replizierschicht abgeformte Reliefstruktur als auch die Volumenhologrammschicht durch den aufgebrachten Druck deformiert und in ihren optischen Eigenschaften nachhaltig verändert werden. Auch das Einbringen von Mikroperforationen, welche sich zumindest durch die Replizierschicht und die Volumenhologrammschicht erstrecken, führt zu einer nachhaltigen und nicht mehr rückgängig zu machenden Veränderung der die optischen Effekte generierenden Schichten. Dadurch ist eine nachträgliche Änderung der individualisierten Information beispielsweise durch ablösen oder abtragen eines Überdrucks nicht mehr möglich und Manipulationsversuche werden unmittelbar erkennbar.

Gemäß einer bevorzugten Ausführungsform der Erfindung werden die ein oder mehreren ersten Zonen oder die ein oder mehreren zweiten Zonen musterförmig zur Ausbildung einer dritten Information ausgeformt. So bilden beispielsweise die ersten oder die zweiten Zonen Musterbereiche, welche beispielsweise ein Porträt, ein Logo, eine Guilloche oder eine alphanumerische Information vor einem Hintergrundbereich darstellen, der von den zweiten bzw. ersten Zonen gebildet wird. Besonders vorteilhaft ist es hierbei, die ersten bzw. zweiten Zonen in Form dünner Linien mit einer Linienbreite < 300 µm, bevorzugt < 150 µm, auszuformen und durch solche Linien beispielsweise eine Guilloche oder eine für den menschlichen Betrachter erkennbare sonstige Information, beispielsweise ein Porträt, auszuformen.

Gemäß eines weiteren bevorzugten Ausführungsbeispiels der Erfindung sind in einem ersten Bereich des Sicherheitselements abwechselnd erste und zweite Zonen vorgesehen und hierbei in zumindest einer Richtung aufeinander folgende erste Zonen weniger als 300 µm voneinander beabstandet. Hierdurch wird erreicht, dass in dem ersten Bereich sich die erste und zweite optisch variable Information für den menschlichen Betrachter in ein- und demselben Bereich zeigen und so für den menschlichen Betrachter im ersten Bereich ein besonders prägnanter und sehr schwer nachahmbarer optisch variabler Eindruck entsteht. Es ist so möglich, völlig neue Farb- und Bewegungseffekte für den menschlichen Betrachter im ersten Bereich als Sicherheitsmerkmal zu generieren, welche weder durch ein Volumenhologramm noch durch ein Oberflächenhologramm als solches bereitgestellt werden können.

Vorzugsweise beträgt das Verhältnis der mittleren Breite der ersten Zonen zu dem Verhältnis der mittleren Breite der zweiten Zonen in dem ersten Bereich zwischen 0,75:1 und 1:5. So wird beispielsweise vorzugsweise die Breite der ersten Zonen geringer als 120 µm und die Breite der zweiten Zonen größer als 120 µm gewählt. Untersuchungen haben gezeigt, dass bei einer derartigen Wahl der Breite der ersten und zweiten Zonen ein sich für den menschlichen Betrachter in dem ersten Bereich ergebender optisch variabler Eindruck besonders klar und lichtstark ist.

Vorzugsweise werden die ersten und zweiten Zonen gemäß eines regelmäßigen, ein- oder zweidimensionalen Rasters, beispielsweise eines Linienrasters oder eines Flächenrasters angeordnet. Die Form der ersten und zweiten Zonen kann hierbei auch weiter substrukturiert sein, beispielsweise die Form von alphanumerischen Zahlen oder von Symbolen besitzen, sodass hierdurch ein weiteres, nur durch ein Hilfsmittel erkennbares Sicherheitsmerkmal bereitgestellt wird. Wird ein Flächenraster gewählt, so sind die ersten Zonen bzw. zweiten Zonen vorzugsweise punktförmig oder in Form eines Vielecks ausgeformt. Weiter ist es auch möglich, dass es sich bei dem ein- oder zweidimensionalen Raster um ein geometrisch transformiertes Raster handelt, es sich beispielsweise um ein kreisförmig oder wellenförmig transformiertes eindimensionales Raster handelt, sodass beispielsweise die ersten Zonen in Form von konzentrischen Kreisringen oder in Form von Wellenlinien im ersten Bereich vorgesehen sind.

Gemäß einer weiteren bevorzugten Ausführungsform der Erfindung besitzt der erste Bereich eine kleinste Abmessung von mehr als 300 µm und ist musterförmig zur Ausbildung einer vierten Information ausgeformt. Der sich in dem ersten Bereich ergebenden, oben geschilderte überlagerte optisch variable Eindruck ist so beispielsweise in einem kreuzförmigen oder in einem ein Porträt bildenden Bereich vorgesehen, wodurch sich weitere interessante und einprägsame optisch variable Effekte erzielen lassen.

Bei der in die Replizierschicht abgeformten Reliefstruktur handelt es sich vorzugsweise um eine Reliefstruktur mit Abmessung < 50 µm, beispielsweise um ein Beugungsgitter mit einer Spatialfrequenz von 100 bis 3.500 Linien/mm, um ein Hologramm, um eine Beugungsstruktur nullter Ordnung, um ein Blaze-Gitter, um ein Kinoform, um eine vorzugsweise anisotrope Mattstruktur oder eine isotrope Mattstruktur, eine refraktive Struktur, beispielsweise eine Linsen-Struktur, beispielsweise eine Mikro-Linsenstruktur, ein Blaze-Gitter oder eine prismatische Struktur, oder um eine Kombination einer oder mehrerer der vorgenannten Reliefstrukturen. Weiter ist es möglich, dass die Reliefstruktur vollflächig in die Replizierschicht abgeformt ist oder lediglich in Teilbereiche der Replizierschicht, vorzugsweise lediglich im Bereich der ersten Zonen, in die Replizierschicht abgeformt ist.

Die metallische Schicht besteht vorzugsweise aus Aluminium, Silber, Gold, Kupfer Chrom, SiOₓ oder aus einer Legierung dieser Materialien. Die Schichtdicke der metallischen Schicht beträgt vorzugsweise 0,1 bis 100 nm, wobei die Schichtdicke der metallischen Schicht vorzugsweise so gewählt ist, dass der Opazitätsgrad der metallischen Schicht mehr als 40 % bis 50 %, vorzugsweise mehr als 80 %, beträgt.

Gemäß eines bevorzugten Ausführungsbeispiels der Erfindung stellen zwei oder mehr Informationen aus der Gruppe erste, zweite, dritte und vierte Information sich ergänzende Informationen dar. So werden beispielsweise von der ersten und zweiten optisch variablen Information jeweils Teilmotive eines Gesamtmotivs gebildet. Beispielsweise bildet die zweite Information Blätter eines Baumes aus, welcher von der ersten Information dargestellt wird. Hierdurch wird weiter erreicht, dass jede Manipulation einer der Schichten des Sicherheitselements, auch eine sehr geringfügige, sofort dem menschlichen Betrachter intuitiv erkennbar wird.

Weiter ist es auch möglich, dass erste, zweite, dritte und vierte Informationen nebeneinander liegend oder sich überlagernd in dem Sicherheitselement vorgesehen sind. So ist es beispielsweise möglich, in einem ersten Bereich erste Zonen in Form eines Bildes, beispielsweise eines Blumenmusters, auszuformen (dritte Information), in einem zweiten, musterförmigen Bereich erste und zweite Zonen gemäß eines Rasters anzuordnen (vierte Information) und in einem dritten Bereich die ersten Zonen in Form von einer, eine bildliche Darstellung ergebende, dünne Linie vorzugsweise mit einer Linienbreite von weniger als 120 µm auszuformen. Diese Bereiche können sich auch teilweise überlagern. Weiter ist es auch möglich, in weiteren Bereichen erste Zonen mit einer Linienbreite von weniger als 50 µm vorzusehen, beispielsweise die ersten Zonen in Form eines Mikrotextes auszuformen.

Gemäß eines bevorzugten Ausführungsbeispiels der Erfindung wird der Volumenhologramm-Master unterhalb der Volumenhologrammschicht in direkten Kontakt mit der Volumenhologrammschicht oder durch ein optisches Medium von der Volumenhologrammschicht getrennt angeordnet. Als Volumenhologramm-Master wird hierbei vorzugsweise ein ein optisch variables Oberflächenrelief aufweisender Volumenhologramm-Master verwendet, der mit einer Reflexionsschicht versehen ist. Es ist jedoch auch möglich, anstelle eines Oberflächenreliefs als Volumenhologramm-Master auch ein Volumenhologramm zu verwenden, wie dies bei der klassischen Aufzeichnungstechnik für Volumenhologramme der Fall ist, bei der ein Volumenhologramm-Master zur Aufzeichnung eines Volumenhologramms verwendet wird. Auch eine Kombination eines Oberflächenrelief-Masters und eines Volumenhologramm-Masters kann bei der Aufzeichnung des Volumenhologramms zum Einsatz kommen. Im Weiteren ist es auch möglich, dass der Volumenhologramm-Master auf der von der Volumenhologrammschicht abgewandten Seite angeordnet wird und das für die Aufzeichnung des Volumenhologramms verwendete kohärente Licht durch einen derart angeordneten Volumenhologramm-Master tritt oder von einem derart angeordneten Volumenhologramm-Master reflektiert wird, bevor es durch die Replizierschicht und die partielle Metallschicht hindurch tritt, um die Volumenhologrammschicht zu belichten. Der Referenzstrahl wird in diesem Fall vorzugsweise von der gegenüberliegenden Seite, also von der der Volumenhologrammschicht zugewandten Seite, auf die Volumenhologrammschicht zur Ausbildung des Interferenzmusters eingestrahlt.

Die Farbe des in der Volumenhologrammschicht aufgezeichneten Volumenhologramms wird vorzugsweise durch die Wellenlänge des zur Belichtung verwendeten Lichts, durch den Einfallswinkel des zur Belichtung verwendeten Lichts, durch das Beugungsverhalten des Volumenhologramm-Masters, insbesondere durch dessen Oberflächenrelief, Gitterperiode oder Azimutwinkel sowie durch das Fotopolymer, den Aushärtungsprozess des Fotopolymers sowie einer optionalen Behandlung des Fotopolymers zur Schrumpfung bzw. Schwellung der Volumenhologrammschicht bestimmt.

Zur Herstellung von Mehrfarben-Volumenhologrammen ist es so beispielsweise möglich, die Volumenhologrammschicht bereichsweise durch unterschiedliche Aushärtungen bzw. unterschiedliche Nachbehandlungen bereichsweise zu schrumpfen bzw. zu quellen, und so Bereiche zu generieren, in denen das Volumenhologramm der Volumenhologrammschicht eine unterschiedliche Farbe zeigt.

Gemäß einer bevorzugten Ausführungsform der Erfindung wird zur Herstellung von Mehrfarben-Volumenhologrammen folgendes Verfahren durchgeführt:

Es werden zwei oder mehrere Laser zur Belichtung der Volumenhologrammschicht verwendet. Hierbei ist es zum einen möglich, dass die Volumenhologrammschicht durch die von den jeweiligen Lasern generierten Lichtstrahlen unter einem unterschiedlichen Einfallswinkel belichtet werden, so dass durch jeden der Laser ein Bildbereich des Volumenhologramms generiert wird, welcher einen anderen Farbwert aufweist. Weiter ist es auch möglich, dass die Laser Licht unterschiedlicher Wellenlänge aussenden und so durch die jeweiligen Laser Bildbereiche mit unterschiedlichen Farbwerten in der Volumenhologrammschicht aufgezeichnet werden. Besonders vorteilhaft ist hierbei, wenn das von den zwei oder mehreren Lasern generierte Licht mittels eines Kopplers in einem Lichtstrahl gekoppelt wird, welcher zur Aufzeichnung des Volumenhologramms in der Volumenhologrammschicht verwendet wird. Die oben beschriebenen Verfahren können auch miteinander kombiniert werden.

Zur Generierung eines Mehrfarbenvolumenhologramms mit Bildbereichen, die unterschiedliche Farbwerte aufweisen, wird hierbei vorzugsweise wie folgt vorgegangen:

Die Laser, ein in dem Strahlengang zwischen dem jeweiligen Laser und der Volumenhologrammschicht angeordneter Modulator und/oder ein den Einfallswinkel der Belichtungsstrahlen bestimmendes Ablenkelement werden entsprechend angesteuert, so dass der jeweilige, einen vorgegeben Farbwert aufzuweisende Bildbereich mit einem Licht einer Belichtungswellenlänge und/oder unter einem Winkel auftreffenden Licht belichtet wird, welches eine Aufzeichnung eines Volumenhologramm-Bildbereichs mit dem vorgegebenen Farbwert bewirkt. Weiter ist es hierbei auch möglich, Belichtungsmasken in dem Strahlengang zwischen den zwei oder mehreren Lasern und der Volumenhologrammschicht anzuordnen, welche die Lage und Ausformung der durch den jeweiligen Laser aufgezeichneten Bildbereiche bestimmen.

Vorzugsweise werden hierbei die zwei oder mehreren Laser, die Modulatoren und/oder die Ablenkungselemente hierbei von einer Steuereinheit angesteuert, welche die Position des Volumenhologramm-Masters zu den Lasern beispielsweise mittels eines Lagesensors bestimmt und eine passergenaue Belichtung des Volumenhologramm-Masters durch die zwei oder mehreren Laser zur Generierung des Mehrfarben-Volumenhologramms steuert. Somit ist es möglich, verschiedene Bereiche des Volumenhologramm-Masters, die jeweils unterschiedliche diffraktive Strukturen (beispielsweise mit Unterschieden im Strukturprofil, im Azimut oder Linienabstand) aufweisen können, mit Laserlicht mit unterschiedlichen Parametern (z.B. Einfallswinkel, Wellenlänge oder Polarisation) zu belichten.

Im Folgenden wird die Erfindung anhand von mehreren Ausführungsbeispielen unter Zuhilfenahme der beiliegenden Zeichnungen beispielhaft verdeutlicht.
Fig. 1a bis Fig. 1c zeigen jeweils eine schematische Darstellung eines Verfahrensablaufs gemäß dem erfindungsgemäßen Verfahren zur Herstellung eines Sicherheitselements.
Fig. 2 zeigt eine schematische Schnittdarstellung eines Folienkörpers, der für die Durchführung der Verfahren nach Fig. 1a bis Fig. 1c bereitgestellt wird.
Fig. 3 zeigt eine schematische Schnittdarstellung eines Mehrschichtkörpers, welcher als Zwischenprodukt bei den Verfahren nach Fig. 1a bis Fig. 1c auftritt.
Fig. 4 zeigt eine schematische Schnittdarstellung eines Mehrschichtkörpers, der ein Zwischenprodukt bei einem weiteren Ausführungsbeispiel der Erfindung bildet.
Fig. 5 zeigt eine schematische Schnittdarstellung eines Mehrschichtkörpers, welcher als Zwischenprodukt bei den Verfahren nach Fig. 1a bis Fig. 1c auftritt.
Fig. 6 zeigt eine schematische Schnittdarstellung eines Mehrschichtkörpers, welcher als Zwischenprodukt bei den Verfahren nach Fig. 1a bis Fig. 1c auftritt.
Fig. 7 zeigt eine schematische Schnittdarstellung eines mehrschichtigen Folienkörpers.
Fig. 8 zeigt eine schematische, vergrößerte Draufsicht auf das Sicherheitselement nach Fig. 7.
Fig. 9a und Fig. 9b zeigen schematische Schnittdarstellungen eines Folienkörpers .
Fig. 10a bis Fig. 10c zeigen schematische Schnittdarstellungen eines Folienkörpers .
Fig. 10d zeigt eine Darstellung einer von einem Folienkörper bereitgestellten optischen Information.
Fig. 11a und Fig. 11b zeigt schematische Schnittdarstellungen eines Folienkörpers .
Fig. 12a zeigt eine Darstellung einer von einem erfindungsgemäßen Folienkörper bereitgestellten optischen Information.
Fig. 12b zeigt eine schematische Draufsicht auf einen Volumenhologramm-Master.
Fig. 12c zeigt eine schematische Draufsicht auf ein Volumenhologramm-Master mit mehreren Belichtungs-Bereichen.

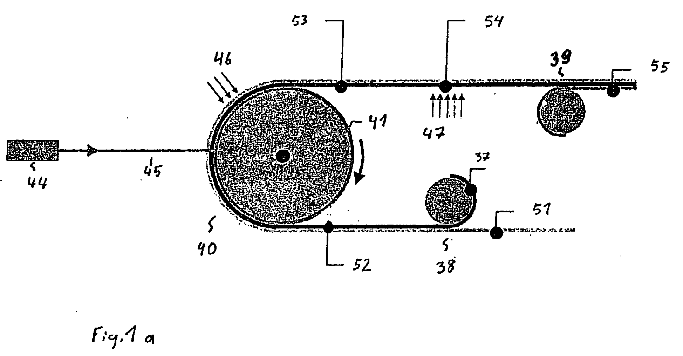

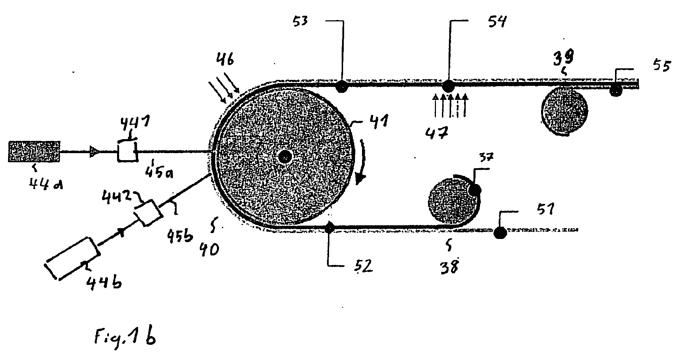

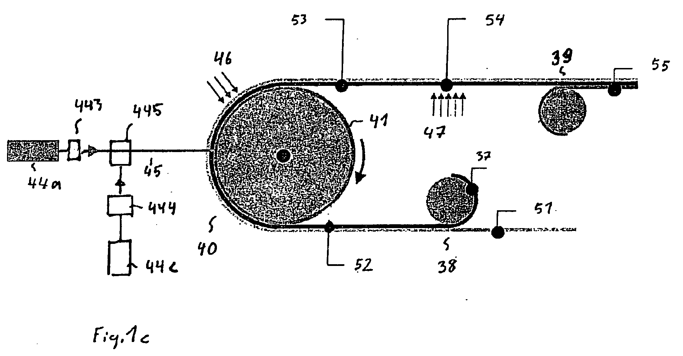

Fig. 1a verdeutlicht die Vorgehensweise bei Herstellung eines erfindungsgemäßen Sicherheitselements. Fig. 1 a zeigt eine Beschichtungsstation 38, eine Belichtungsstation 40, eine Belichtungsstation 47 und eine Beschichtungsstation 39. Der Beschichtungsstation 38 wird ein Folienkörper 51 zugeführt. Auf dem Folienkörper 51 wird von der Beschichtungsstation 38 eine Volumenhologrammschicht aufgebracht, beispielsweise indem eine Oberfläche des Folienkörpers 51 vollflächig oder partiell mit einem die Volumenhologrammschicht ausbildenden Photopolymermaterial 37 durch Drucken, Sprühen oder Gießen beschichtet wird. Der sich so ergebende Mehrschichtkörper 52 wird anschließend der Belichtungsstation 40 zugeführt und dort zur Aufzeichnung eines Volumenhologramms in die Volumenhologrammschicht mit kohärentem Licht 45 von dem Laser 44 belichtet und anschließend durch die UV-Lichtquelle 46 bestrahlt. Der sich so ergebende Mehrschichtkörper 53 wird der Belichtungsstation 47 zugeführt, um ein vollständiges Aushärten der Volumenhologrammschicht zu erreichen. Der sich so ergebende Mehrschichtkörper 54 wird der Beschichtungsstation 39 zugeführt, von der ein oder mehrere weitere Schichten auf den Mehrschichtkörper 54 aufgebracht werden. So wird beispielsweise von der Beschichtungsstation 39 eine Kleberschicht vollflächig auf eine Oberfläche des Mehrschichtkörpers 54 aufgebracht, wodurch sich der Mehrschichtkörper 55 ergibt.

Im Folgenden wird der detaillierte Ablauf des in Fig. 1a verdeutlichten Verfahrens anhand der folgenden Figuren erläutert:

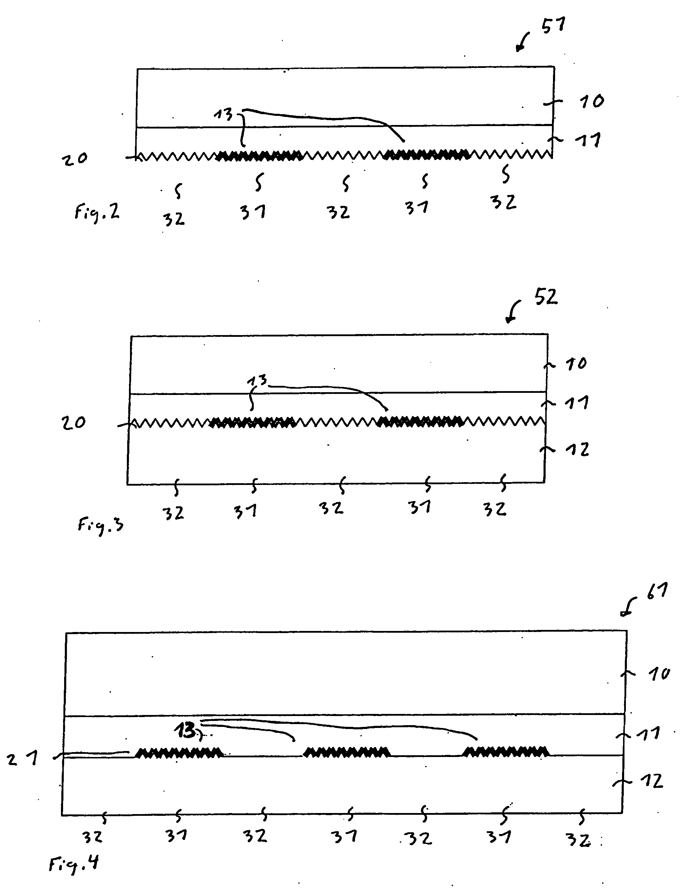

Fig. 2 zeigt den Mehrschichtkörper 51. Der Mehrschichtkörper 51 weist eine transparente Trägerfolie 10 und eine Replizierschicht 11 auf. Bei der Trägerfolie 10 handelt es sich um eine vorzugsweise biaxial gereckte Kunststofffolie mit einer Schichtdicke zwischen 15 und 100 µm, bevorzugt zwischen 16 und 30 µm. Beispielsweise handelt es sich bei der Trägerfolie um eine PET-, PEN- oder BOPP-Folie.

Die Replizierschicht 11 wird vorzugsweise in einer Schichtdicke von 0,1 bis 25 µm, bevorzugt etwa 20 µm auf die Trägerfolie 10 aufgebracht. Die Replizierschicht 11 besteht aus einem thermoplastischen, das heißt thermisch härtbarem und/oder thermisch trockenbaren, oder UV-härtbaren Replizierlack oder aus einem Replizierlack mit thermoplastischen und UV-härtbaren Komponenten. Alternativ dazu kann auch die Trägerfolie 10 selbst als Replizierschicht dienen, das heißt die Reliefstruktur 20 kann direkt in der Trägerfolie 10 abgeformt sein. Eine separate Replizierschicht aus Replizierlack ist dann nicht mehr erforderlich, wodurch die Dicke des Sicherheitselements verringert werden kann. Weiter ist es auch möglich, dass die Replizierschicht aus der Trägerfolie 10 und einer Replizierlackschicht besteht, wobei in Abhängigkeit von der Relieftiefe sich die Reliefstruktur in die Replizierschicht oder in die Trägerschicht erstreckt, d.h. die Replizierlackschicht wird im Bereich der tiefen Strukturen durchprägt. In die Unterseite der Replizierschicht 11 ist vollflächig eine Reliefstruktur 20 abgeformt. Beispielsweise mittels eines beheizten Prägewerkzeugs, durch welches die Reliefstruktur 20 mittels Hitze und Druck in die von einem thermoplastischen Replizierlack gebildete Replizierschicht 11 abgeformt wird. Weiter ist es auch möglich, dass die Reliefstruktur 20 mittels UV-Replikation in die Unterseite der Replizierschicht 11 abgeformt wird, indem die Replizierschicht 11 nach Abformung des Oberflächenreliefs durch eine entsprechend ausgeformte Gegenform mit UV-Licht bestrahlt und ausgehärtet wird. Weiter ist es auch möglich, dass die Reliefstruktur 20 mittels eines Lasers oder eines anderen ablativen Verfahrens in die Oberfläche der Replizierschicht 11 eingebracht wird.

Bei der Reliefstruktur 20 handelt es sich um eine diffraktive, optisch variable Oberflächenstruktur, beispielsweise um ein Hologramm, um ein vorzugsweise sinusförmiges Beugungsgitter, um eine asymmetrische Reliefstruktur, um ein Blaze-Gitter, um eine vorzugsweise anisotrope oder isotrope, holographisch erzeugte Mattstruktur, um ein Kinegram^{®}, um ein computergeneriertes Hologramm oder um eine Kombination derartiger, beugungsoptisch wirkender, feiner Reliefstrukturen, deren Strukturgrößen etwa im Größenbereich der Wellenlängen des sichtbaren Lichts liegen, also etwa im Bereich von unterhalb 1000 nm.

Vorzugsweise beträgt hierbei der Abstand benachbarter lokaler Maxima weniger als 50 µm, sodass höhere Beugungsordnungen unterdrückt werden und ein deutlich wahrnehmbarer optisch variabler Eindruck durch die Reliefstruktur 20 bereitgestellt wird. Weiter ist es auch möglich, dass die Reliefstruktur von einem Beugungsgitter nullter Ordnung gebildet wird, bei dem die Abstände benachbarter Strukturelemente im Bereich oder unterhalb der Wellenlänge des für den menschlichen Betrachter sichtbaren Lichtes liegen. Weiter ist es auch möglich, dass die Reliefstruktur 20 von refraktiv wirkenden, makroskopischen Strukturen, beispielsweise Mikroprismen oder linsenförmigen Strukturen oder binäre, rechteckförmige Strukturen, gebildet werden, deren lokale Beabstandung im Bereich von bis zu einigen mm, bevorzugt bis 500 µm liegen können. Bevorzugt liegen die Strukturabmessungen unterhalb von 40 µm. Die Reliefstruktur 20 kann auch von einer Kombination, beispielsweise nebeneinander angeordneten Flächenbereichen, aus refraktiv wirkenden, makroskopischen Strukturen und diffraktiv wirkenden mikroskopischen Strukturen oder aus einer Überlagerung von refraktiv wirkenden, makroskopischen Strukturen mit diffraktiv wirkenden, mikroskopischen Strukturen gebildet sein. Diffraktive und refraktive Strukturen können gleichzeitig mit ein und demselben Prägwerkzeug in der Replizierschicht 11 abgeformt werden, sodass eine exakt registergenaue Anordnung beider Strukturen zueinander erfolgen kann. So können diffraktive und refraktive Strukturen in getrennten Bereichen nebeneinander oder auch in gemeinsamen Bereichen, beispielsweise ineinander geschachtelt vorliegen.

Die Beabstandung der lokalen Maxima der Reliefstruktur 20 bzw. die lokale Periodizität der Reliefstruktur 20 wird hierbei unabhängig von der Periodizität eines von ersten und zweiten Bereichen gebildeten Rasters und von der Breite der ersten oder zweiten Bereiche gewählt.

Auf die Replizierschicht 11 ist weiter eine partielle metallische Schicht 13 aufgebracht, wobei die metallische Schicht 13 in ersten Zonen 31 des Mehrschichtkörpers 51 vorgesehen ist und in zweiten Zonen 32 des Mehrschichtkörpers 51 nicht vorgesehen ist, wie dies in Fig. 2 beispielhaft dargestellt ist. Die metallische Schicht 13 besteht vorzugsweise aus Aluminium, Kupfer, Gold, Silber, Chrom oder SiOₓ oder einer Legierung dieser Materialien und weist bevorzugt eine Dicke von 0,1 bis 100 nm auf.

Zur Herstellung der partiellen metallischen Schicht 13 wird hierbei die Unterseite der Replizierschicht 11 vorzugsweise vollflächig mit einer metallischen Schicht beschichtet und sodann die metallische Schicht nachträglich wieder in den Zonen 32 entfernt, beispielsweise durch Positiv/Negativätzen oder mittels Ablation. Hierbei ist es insbesondere möglich, in den Zonen 32 die metallische Schicht mittels eines Lasers abzutragen, um so eine Individualisierung des zu fertigenden Sicherheitselements zu erzielen. Weiter ist es auch möglich, dass die metallische Schicht lediglich bereichsweise und unter Umständen bereits musterförmig auf die Replizierschicht 11 aufgebracht wird, beispielsweise mittels Bedampfungsmasken. Auch eine Kombination der oben beschriebenen Demetallisierungs- und Ablationsverfahren ist möglich, um beispielsweise lediglich in einen Teilbereich eine individualisierbare Information, beispielsweise eine fortlaufende Nummer, einzubringen.

Weiter ist es auch möglich, dass der Mehrschichtkörper 51 neben den in Fig. 2 gezeigten Schichten noch ein oder mehrere weitere Schichten aufweist. So ist es beispielsweise möglich, dass der Mehrschichtkörper 51 zwischen der Trägerschicht 10 und der Replizierschicht 11 noch ein oder mehrere weitere Schichten aufweist, um beispielsweise als Endprodukt eine Transferfolie, beispielsweise eine Heißprägefolie, zur Verfügung zu stellen. In diesem Fall weist der Folienkörper 51 vorzugsweise noch eine Ablöseschicht und eine Schutzlackschicht auf, welche zwischen der Trägerschicht 10 und der Replizierschicht 11 vorgesehen sind. Weiter ist es auch möglich, dass der Mehrschichtkörper 51 noch ein oder mehrere weitere Dekorschichten aufweist, beispielsweise noch ein oder mehrere eingefärbte Lackschichten aufweist.

Auf der Unterseite des Mehrschichtkörpers 51 wird nun in einem ersten Schritt ein eine Volumenhologrammschicht ausbildendes Polymer aufgebracht. Dies erfolgt beispielsweise mittels eines Druckverfahrens, vorzugsweise mittels verschmierenden Verfahren. Das Fotopolymer wird hierbei vorzugsweise in einer Schichtdicke von 5 bis 100 µm, weiter bevorzugt in einer Schichtdicke von etwa 20 µm auf die Unterseite des Mehrschichtkörpers 51 aufgebracht. So ergibt sich der in Fig. 3 gezeigte Mehrschichtkörper 52, der neben den bereits anhand von Fig. 2 erläuterten Schichten 10, 11 und 13 weiter eine Volumenhologrammschicht 12 aufweist.

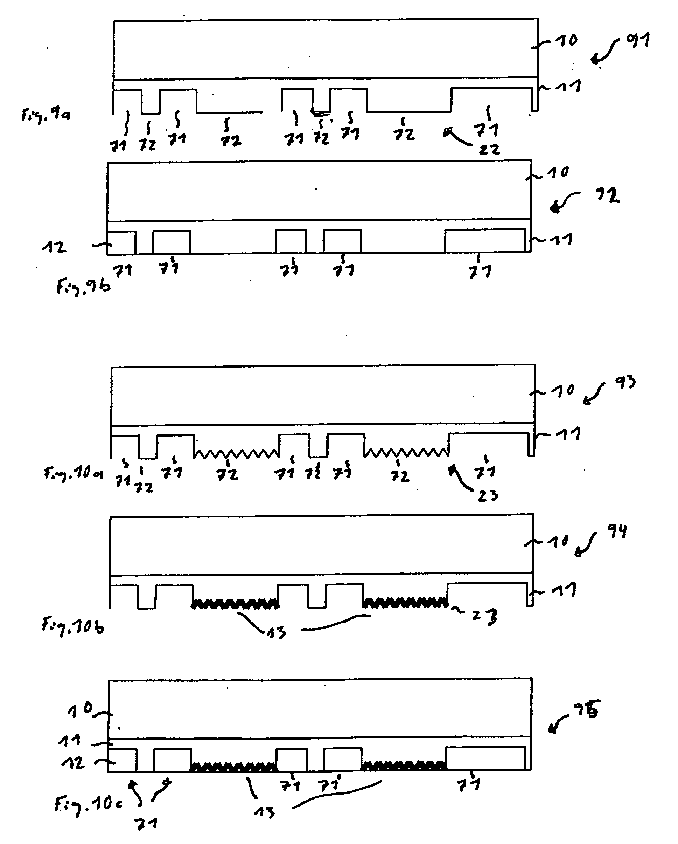

Im Falle einer nur partiell zu erzeugenden Volumenhologrammschicht 12 kann der Folienkörper 51 ein makroskopisches und/oder mikroskopisches Oberflächenprofil mit vorzugsweise einer Tiefe von etwa 10 bis 50 µm, besonders bevorzugt etwa 15 bis 20 µm aufweisen. Nach dem vorzugsweise vollflächigen Aufbringen des Photopolymermaterials 37 durch Drucken, Sprühen oder Gießen wird beispielsweise mittels eines Rakels das Photopolymermaterial 37 noch stärker in die tiefen Strukturen hineingepresst und außerhalb der Vertiefungen von der Oberfläche des Folienkörpers 51 zumindest weitgehend entfernt, sodass Oberflächenbereiche auf dem Folienkörper 51 entstehen, die mit Photopolymermaterial 37 bedeckt sind und daran angrenzende Oberflächenbereiche entstehen, die weitestgehend frei bzw. unbedeckt von Photopolymermaterial 37 sind. Dies wird weiter unten noch im Detail anhand der Figuren Fig. 9a bis Fig. 11b erläutert.

Bei dem für die Volumenhologrammschicht 12 verwendeten Fotopolymer handelt es sich beispielsweise um das Fotopolymer Omni DEX 706 der Firma Dupont. Weiter ist auch die Verwendung von Fotopolymeren möglich, die als flüssige Substanz vorliegen und beispielsweise durch Einwirkung von UV-Licht polymerisiert und dadurch ausgehärtet werden. Es kann auch vorgesehen sein, das Fotopolymer als Schicht aufzugießen und durch eine schwache UV-Lichteinwirkung oder Wärmebehandlung vorzuhärten.

Vorzugsweise wird hierbei das für die Replizierschicht 11 verwendete Material so gewählt, dass der Brechungsindex des Materials der Replizierschicht 11 und der Brechungsindex der noch nicht belichteten Volumenhologrammschicht in etwa gleich sind oder einen Brechungsindexunterschied von weniger als 0,2 aufweisen. Hierdurch wird sichergestellt, dass bei der nachfolgenden Belichtung die in den Zonen 32 - wie in Fig. 3 angedeutet - noch vorhandenen Bereiche der Oberflächenstruktur 20 mit einem Material mit etwa gleichem Brechungsindex verfüllt werden und so die Aufzeichnung des Volumenhologramms in der Volumenhologrammschicht 12 nicht verfälschen können.

So wird beispielsweise als Replizierschicht 11 folgende Schicht verwendet:

### Replizierschicht 11

| | |
|---|---|
| Methylethylketon | 2100 g |
| Toluol | 750 g |
| Cyclohexanon | 1000 g |
| Acetyltributylcitrat | 30 g |
| Nitrocellulose (esterlöslich, Norm 34 E) | 1000 g |
| Methylmethacrylat-Butylacrylat Copolymer | |
| (T_{glas} 80 *C, T_{erweich} ca. 120 °C) | 180 g |

T_{glas} = Glasübergangstemperatur; T_{erweich} = Erweichungstemperatur

Weiter ist es auch möglich, zusätzlich zu der Schicht 13 eine HRI (High Refractive Index)-Schicht mit hohem Brechungsindex, beispielsweise bestehend aus ZnS vorzusehen ist, welche die Oberflächenstruktur 20 vorzugsweise vollflächig bedeckt. Diese zusätzliche Schicht kann vor oder nach der Ausformung der Schicht 13 auf den Folienkörper aufgebracht werden.

Fig. 4 zeigt einen Mehrschichtkörper 61, welcher ebenfalls eine Trägerschicht 10, eine Replizierschicht 11 und eine Volumenhologrammschicht 12 aufweist, welche wie oben anhand der Figuren Fig. 2 und Fig. 3 erläutert ausgebildet sind. Im Unterschied zu dem Mehrschichtkörper 52 ist bei dem Mehrschichtkörper 61 in die Replizierschicht 11 eine Reliefstruktur 21 abgeformt, welche nicht vollflächig, sondern lediglich in den Zonen 31 in die Replizierschicht 11 abgeformt ist. Weiter ist es auch möglich, dass die Bereiche, in denen die Reliefstruktur 21 in die Replizierschicht 11 abgeformt sind, und die Zonen 31, in denen die metallische Schicht 13 vorgesehen ist, bezüglich ihrer Dimensionen so ausgelegt sind, dass bei den bei dem Fertigungsprozess verwendeten Registrierungsverfahren zwischen dem Demetallisierungsprozess und dem Replikationsprozess auftretenden Registerabweichungen sichergestellt ist, dass die Reliefstruktur 21 in den Zonen 31 abgeformt ist. Beispielsweise indem die Abmessung der mit der Reliefstruktur 21 versehenen Bereiche um die Registerabweichung bzw. um das zweifache der Registerabweichung gegenüber den Zonen 31 vergrößert sind. Weiter ist es auch möglich, dass die Zonen 31 lediglich bereichsweise mit der Reliefstruktur 21 versehen sind und beispielsweise die Bereiche, in denen die Reliefstruktur 21 vorgesehen ist, musterförmig unabhängig von der Ausformung der Zonen 31 gewählt sind.

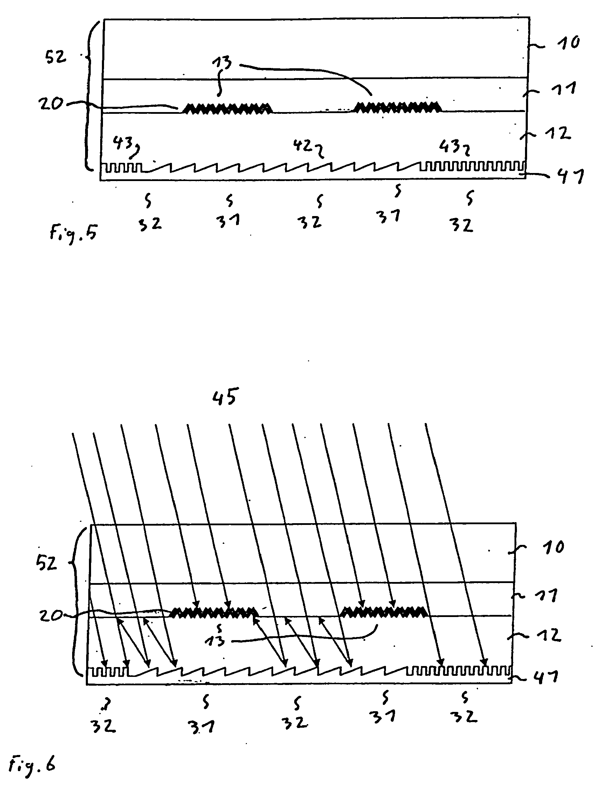

Der in Fig. 3 beschriebene Mehrschichtkörper 52 wird nun der Belichtungsstation 40 zugeführt. Die Belichtungsstation 40 weist einen Volumenhologramm-Master 41 auf, der auf der Oberfläche einer Belichtungswalze angebracht ist. Die Unterseite des Mehrschichtkörpers 52 liegt hierbei auf der Oberfläche der Belichtungswalze auf, sodass sich die in Fig. 5 gezeigt Anordnung ergibt: Der Volumenhologramm-Master 41 mit Oberflächenstrukturen 43 und 42 steht in unmittelbarem Kontakt mit dem noch weichen Material der Volumenhologrammschicht 12. Weiter ist es hier auch möglich, dass eine transparente Abstandschicht zwischen dem Volumenhologramm-Master und dem Mehrschichtkörper 52 vorgesehen ist, um so beispielsweise die Lebensdauer des Masters zu verbessern.

Weiter ist es auch möglich, dass als Volumenhologramm-Master nicht ein mit einem Oberflächenrelief versehener Master verwendet wird, sondern ein Volumenhologramm und die Aufzeichnung des Volumenhologramms in der Volumenhologrammschicht durch ein übliches, holographisches Kopierverfahren zur Ausbildung eines Transmissions- oder Reflexionshologramms in der Volumenhologrammschicht erfolgt.

Weiter ist es auch möglich, dass der Volumenhologramm-Master nicht wie in Fig. 3 gezeigt auf einer Belichtungswalze angebracht ist und die Belichtung in einem kontinuierlichen Rolle-zu-Rolle-Prozess erfolgt, sondern dass die Belichtung abschnittsweise in einem "step-and-repeat" Prozess erfolgt.

Als Reliefstruktur 42 und 43 können die beispielsweise in DE 10 2006 016 139 beschriebenen Strukturen verwendet werden, wobei es sich beispielsweise bei den Strukturen 43 um Mottenaugenstrukturen handelt. Bezüglich der Details des Belichtungsverfahrens wird ebenfalls auf dieses Dokument verwiesen.

Wird nun die Volumenhologrammschicht mittels eines Lasers 44 mit kohärentem Licht 45 zur Einschreibung des durch die Strukturen 42 und 43 vorbestimmten Volumenhologramms in die Volumenhologrammschicht 12 bestrahlt, so ergibt sich der in Fig. 6 gezeigte Effekt: Das einfallende Licht 45 wird in den Zonen 31 von der metallischen Schicht 13 reflektiert und dringt nicht in die darunter liegende Volumenhologrammschicht 12 ein. Vorzugsweise wird das kohärente Licht 45 hierbei in einem Einfallswinkel von etwa 15 Grad zur Normalen der Oberseite des Mehrschichtkörpers 52 eingestrahlt. In den Zonen 32 durchdringt das Licht 45 die Volumenhologrammschicht 12 und wird von dem darunter liegenden Oberflächenrelief des Volumenhologramm-Masters 41 zurückgebeugt, wodurch sich in den Zonen 32 ein Interferenzmuster aus der Überlagerung der einfallenden und rückgebeugten Lichtstrahlen in der Volumenhologrammschicht 12 ausbildet. Dieses Interferenzmuster wird nun in der Volumenhologrammschicht 12 aufgezeichnet.

Das Volumenhologramm wird so in den Zonen 32 und lediglich in den Randbereichen der Zonen 31 in die Volumenhologrammschicht 12 eingeschrieben. Das Einschreiben des Volumenhologramms in den Kernbereich der Zonen 31 wird von der partiellen metallischen Schicht 13 verhindert.

Dabei ist es möglich, zwei oder mehr vorzugsweise scannend arbeitende Laser zu verwenden, deren ausgestrahltes kohärente Licht mit unterschiedlichem Einstrahlwinkel in die Volumenhologrammschicht 12 einfällt. Dies ist beispielhaft in den Figuren Fig. 1b und Fig. 1c gezeigt. Die Einstrahlwinkel der Laser können dabei in einer Ebene liegen, die etwa senkrecht zur Zylinderachse des in den Figuren Fig. 1b und Fig. 1c zylinderförmigen Volumenhologramm-Masters 41 angeordnet ist oder auch in einer Ebene liegen, die etwa parallel zur Zylinderachse des in den Figuren Fig. 1b und Fig. 1c zylinderförmigen Volumenhologramm-Masters 41 angeordnet ist.

Die Figur Fig. 1b verdeutlicht ein Verfahren, bei dem zwei Laser verwendet werden, die so angeordnet sind, dass das von ihnen ausgestrahlte kohärente Licht mit unterschiedlichem Einstrahlwinkel in die Volumenhologrammschicht 12 einfällt. Das Verfahren nach Fig. 1b entspricht so dem Verfahren nach Fig. 1 a mit dem Unterschied, dass anstelle des Lasers 44 zwei Laser 44a und 44b vorgesehen sind, wobei das von diesen generierte kohärente Licht 45a bzw. 45b unter unterschiedlichen Winkeln auf die Volumenhologrammschicht 12 einfällt. Im Weiteren ist in dem Strahlengang zwischen den Lasern 44a und 44b und der Volumenhologrammschicht 12 jeweils ein Modulator 441 bzw. 442 angeordnet, um das auf die Volumenhologrammschicht 12 einfallende kohärente Licht 45a bzw. 45b zu steuern, wie weiter unten näher erläutert ist. Der Modulator 441 bzw. 442 ist dabei ein optionales Element. Ohne Modulator 441 bzw. 442 kann der Laser die Volumenhologrammschicht 12 vollflächig belichten oder der Laser wird mit Hilfe von (nicht näher dargestellten) Masken modifiziert oder auch laser-intern geregelt.

Die Laser 44a und 44b können kohärentes Licht 45a bzw. 45b mit gleichen oder unterschiedlichen Wellenlängen ausstrahlen. In der Volumenhologrammschicht 12 kann dadurch ein mehrfarbiges Bild entstehen, weil der Laserstrahl unter einem jeweils anderen Winkel auf das Photopolymer auftrifft bzw. dieses unter einem jeweils anderen Winkel durchläuft und dadurch anders verlaufende Bragg-Ebenen erzeugt, die für das optische Bild verantwortlich sind. Je nach Variation des Einstrahlwinkels und/oder der Laserlichtwellenlängen werden unterschiedliche Farben des optischen Bildes bzw. des optisch wahrnehmbaren Effekts erzeugt.

Geht man von einer vorgegebenen Anordnung aus Photopolymer-Material und Volumenhologramm-Master mit vorgegebenen Strukturen und kohärentem Licht einer vorgegebenen Farbe/Wellenlänge aus, ergibt sich bei Variation des Einfallswinkels des kohärenten Lichts zur Normalen der Oberseite des Mehrschichtkörpers 52 eine Variation in der Wellenlänge der Lichtfarbe des optisch wahrnehmbaren Effekts. Wird beispielsweise der Einfallswinkel vergrößert, d.h. wird das kohärente Licht flacher zur Oberseite des Mehrschichtkörpers 52 eingestrahlt, verschiebt sich die Wellenlänge der Lichtfarbe des optisch wahrnehmbaren Effekts in den längerwelligen Bereich, weil bei flacherem Einstrahlen der Weg des Strahls in der Materialschicht des Photopolymers länger wird. Beispielsweise kann durch Vergrößerung des Einfallswinkels von grünem kohärenten Licht eine gelblich-grüne Lichtfarbe (mit längerer Wellenlänge als grün) des optisch wahrnehmbaren Effekts oder durch Verkleinerung des Einfallswinkels von grünem kohärenten Licht eine bläulich-grüne (mit kürzerer Wellenlänge als grün) Lichtfarbe des optisch wahrnehmbaren Effekts erzielt werden.

Bei vorgegebenem Volumenhologramm-Master und mehreren Lasern mit unterschiedlich farbigem kohärentem Licht kann mittels der Variation des Einfallswinkels des kohärenten Lichts auch beeinflusst werden, ob der optisch wahrnehmbare Effekt blickwinkelabhängig ist oder nicht. Wird unterschiedlich farbiges kohärentes Licht unter etwa identischen Einfallswinkeln eingestrahlt, ergibt sich ein mehrfarbiger optisch wahrnehmbarer Effekt, der jedoch blickwinkelabhängig ist und je nach Blickwinkel nur jeweils eine der entstehenden Farben zeigt. Sollen alle erzeugten Farben gleichzeitig, d.h. unter ein und demselben Blickwinkel sichtbar sein, muss der Einstrahlwinkel der einzelnen Farben des kohärenten Lichts entsprechend variiert werden, wobei gilt, dass je höher die Wellenlänge des eingestrahlten kohärenten Lichts ist, desto niedriger muss der Einfallswinkel relativ zur Normalen der Oberseite des Mehrschichtkörpers 52 sein. Dabei ist auch ein Einstrahlwinkel von etwa 0 Grad bei langwelligem roten Licht denkbar, z.B. etwa 15 Grad bei grünem Licht (mittlerer Wellenlängebereich des sichtbaren Spektrums) und etwa 30 Grad bei kurzwelligem blauen Licht. Der wahrnehmbare optische Effekt aus roten, grünen und blauen Anteilen wäre dann unter einem gemeinsamen Blickwinkel bzw. auch unter einem gemeinsamen Blickwinkelbereich sichtbar.

Alternativ dazu ist es möglich, zwei oder mehr vorzugsweise scannend arbeitende Laser zu verwenden, die kohärentes Licht mit unterschiedlichen Wellenlängen ausstrahlen und deren Strahlen mittels eines auf Polarisation oder Reflexion beruhenden Kopplers (z.B. zwei an ihrer Basis zusammengeklebte Prismen) so miteinander gekoppelt werden, dass die gekoppelten Strahlen aller Laser in einem gemeinsamen Einstrahlwinkel in die Volumenhologrammschicht 12 einfällt.

Ein Verfahren, bei dem die Volumenhologrammschicht 12 mittels einer derartig angeordneten Belichtungsanordnung belichtet wird, ist beispielhaft in Fig.1c gezeigt. Das Verfahren gemäß Fig. 1c entspricht dem gemäß Fig. 1a mit dem Unterschied, dass anstelle der Belichtung durch den Laser 44 die Belichtung der Volumenhologrammschicht 12 durch eine Belichtungsanordnung verfolgt, welche aus zwei Lasern 44a und 44c, zwei Modulatoren 443 und 444 und einem Koppler 445 besteht. Die Laser 44a und 44c generieren kohärentes Licht unterschiedlicher Wellenlängen, welches mit dem Koppler 445 gekoppelt und als Licht 45 auf die Volumenhologrammschicht 12 eingestrahlt wird. Über eine Ansteuerung des Kopplers 445 kann einfach und schnell die Belichtung der Volumenhologrammschicht 12 durch die beiden Laser 44a und 44c gesteuert werden.

Um mit diesem gekoppelten bzw. kombinierten Lichtstrahl ein Bild zu formen, ist es vorteilhaft, wenn die Lichtstrahl-Intensität moduliert wird, beispielsweise durch Ein- und Ausschalten einzelner Teilstrahlen (binäre Modulation). Bestimmte Laser (z.B. Diodenlaser) können direkt moduliert werden. Andere Laser können mit ausreichend hoher Geschwindigkeit mittels externer Modulatoren, beispielsweise den Modulatoren 443 und 444, moduliert werden, z.B. mittels akusto-optischer oder elektro-optischer Modulatoren. Es ist auch möglich, eine Modulation mittels Shutter oder Chopper zu erzeugen oder die Laserstrahlen einzeln oder gemeinsam mittels Masken oder Blenden zu modulieren.

Vorzugsweise weisen die Anordnungen nach Fig. 1b und Fig. 1c ein Sensorelement und eine Steuereinheit auf. Das Sensorelement erfasst die Position des Volumenhologramm-Masters. Hierzu tastet sie entweder optisch die Oberfläche des Zylinders 41 ab oder erfasst mittels eines Drehwertgebers die Winkellage des Zylinders 41. Die Steuereinheit verwendet die von dem Sensorelement direkt oder indirekt bestimmte Position des Volumenhologramm-Masters als Eingangsparameter zur Ansteuerung der Laser 44a, 44b, 44c und/oder der Modulatoren 441 bis 444. Diese Komponenten werden von der Steuereinheit hierbei basierend auf den von dem Sensorelement ermittelten Messwerten und der vorgegebenen Farbwertverteilung des Mehrfarben-Volumenhologramms so angesteuert, dass die Belichtung des Volumenhologramm-Masters durch Licht unterschiedlicher Wellenlänge bzw. Licht mit unterschiedlichem Einfallswinkel so erfolgt, dass diese im Register zu den vorgegebenen Farbwerten des Mehrfarben-Volumenhologramms erfolgt. Ebenso ist es mit Hilfe des Sensorelements möglich, die Position des Mehrschichtkörpers 52 mit der Volumenhologrammschicht 12, beispielsweise mittels auf dem Mehrschichtkörper 52 aufgebrachten optischen Registermarken, zu erfassen und damit die Laser 44a, 44b, 44c und/oder die Modulatoren 441 bis 444 so anzusteuern, dass eine Belichtung des Volumenhologramm-Masters passergenau bzw. im Register zu bereits auf dem Mehrschichtkörper 52 vorhandenen Designelementen erfolgen kann.

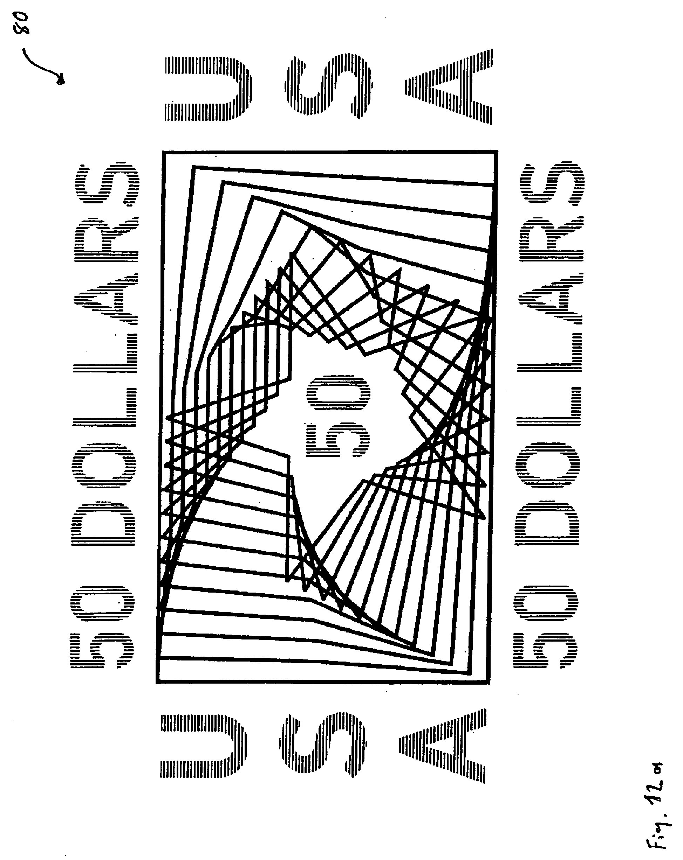

Fig. 12a verdeutlicht den sich einem Betrachter ergebenden optischen Eindruck 80 einer möglichen Ausführung eines Mehrfarben-Volumenhologramms, erzeugt gemäß Fig. 1b oder Fig. 1c. Die Zahl "50" und die Zeichen "50 DOLLARS" erscheinen rot. Die die "50" umgebenden Linien zeigen einen optischen Effekt eines scheinbar bewegten Morphings bzw. einer Überblendung von einem grünen Rechteck zu einem grünen Stern, wenn das Element horizontal gekippt/bewegt wird. Die Zeichen "USA" erscheinen blau.

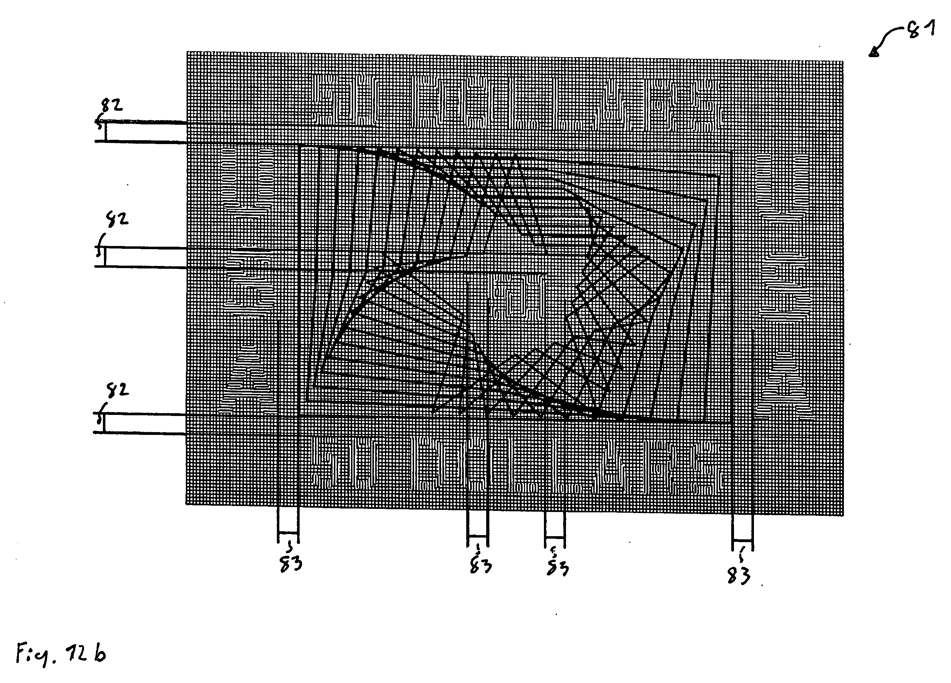

Fig. 12b zeigt einen Volumenhologramm-Master 81, welcher für das Einschreiben des Volumenhologramms verwendet wird. Der Hintergrund ist durch Black-Mirror-Strukturen bzw. Mottenaugen-Strukturen (nicht bild-erzeugend) gebildet und die Designelemente werden mit davon verschiedenen diffraktiven Strukturtypen erzeugt. Das Morphing von einem grünen Rechteck zu einem grünen Stern wird z.B. durch dieselben Strukturen erzeugt, die einen variierenden Azimut aufweisen. Die roten und blauen Elemente "50", "50 DOLLARS" und "USA" können eine davon verschiedene, aber gemeinsam gleiche Struktur, auch mit gleichem Azimut, z.B. 0 Grad aufweisen. Die Designelemente weisen einen Abstand 82, 83 auf, welcher größer sein muss als die nötige Toleranz bei der Positionierung des Laserstrahls auf dem Master.

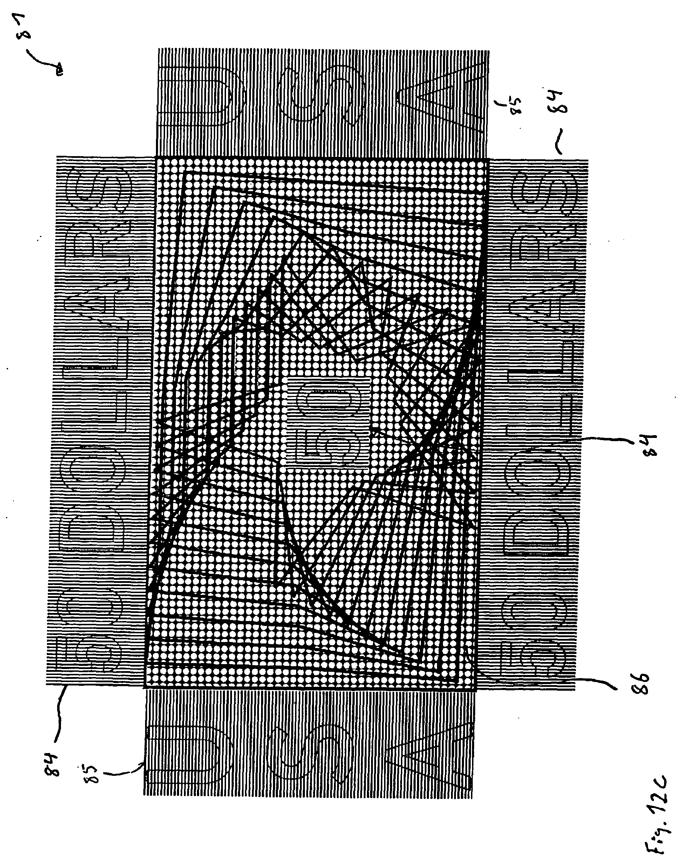

Fig. 12c zeigt den Volumenhologramm-Master 81 und die Regionen des Volumenhologramm-Masters 81, die mit unterschiedlich farbigen Lasern bestrahlt werden. Ein rotes Licht ausstrahlender erster Laser unter einem ersten Einstrahlwinkel bestrahlt die Regionen 84, was rote Designelemente ergibt. Ein grünes Licht ausstrahlender zweiter Laser bestrahlt die Region 86, was grüne Designelemente ergibt. Ein blaues Licht ausstrahlender dritter Laser bestrahlt die Regionen 85, was blaue Designelemente ergibt. Die Einstrahlwinkel der unterschiedlich farbigen Laser können gleich oder jeweils unterschiedlich sein. Anstatt unterschiedlich farbiger Laser können auch in diesem Beispiel Laser gleicher Farbe, aber mit einem je Region 84, 85, 86 unterschiedlichen Einstrahlwinkel zur Oberfläche des Volumenhologramm-Masters 81 Verwendung finden.

Auf diese Weise können mehrfarbige Volumenhologramme erzeugt werden. Bei entsprechend fein gerastertem Volumenhologramm-Master 81 mit eng nebeneinander liegenden Bereichen (Pixel) unterschiedlicher Farben (z.B. RGB) können auch mittels additiver Farbmischung Echtfarbenhologramme erzeugt werden, die auf der Farbmischung der ineinander greifenden Raster der Einzelfarben basieren. Der Volumenhologramm-Master 81 kann dafür eine homogene, gleichmäßige Struktur aufweisen, die jeweils mit kohärentem Licht unterschiedlicher Farbe und/oder unter unterschiedlichen Einstrahlwinkeln bestrahlt wird.. Der Volumenhologramm-Master 81 kann dafür aber auch nur bereichsweise eine homogene, gleichmäßige Struktur aufweisen.
Im Weiteren wird in der Belichtungsstation 40 der Folienkörper 52 nach Einschreiben des Volumenhologramms noch mit UV-Licht 46 von Seiten der Oberseite des Mehrschichtkörpers 52 belichtet, um das Fotopolymer der Volumenhologrammschicht zumindest teilweise auszuhärten und die Braggschen Ebenen der Volumenhologrammschicht zu fixieren. Diese Belichtung erfolgt vorzugsweise mit einer nicht kolliminierten UV-Lichtquelle, sodass ein möglichst großer Bereich der unterhalb der partiellen metallischen Schicht 13 angeordneten Bereiche der Volumenhologrammschicht 12 durch die Bestrahlung ausgehärtet wird. Auch eine Belichtung mit kulminiertem UV-Licht ist möglich.

Der sich so ergebende Mehrschichtkörper 53 wird nun der Belichtungsstation 54 zugeführt, in der der Mehrschichtkörper 53 von der Unterseite her mit UV-Licht belichtet wird und so auch noch die verbleibenden, nicht vollständig ausgehärteten Bereiche der Volumenhologrammschicht vollständig ausgehärtet werden.

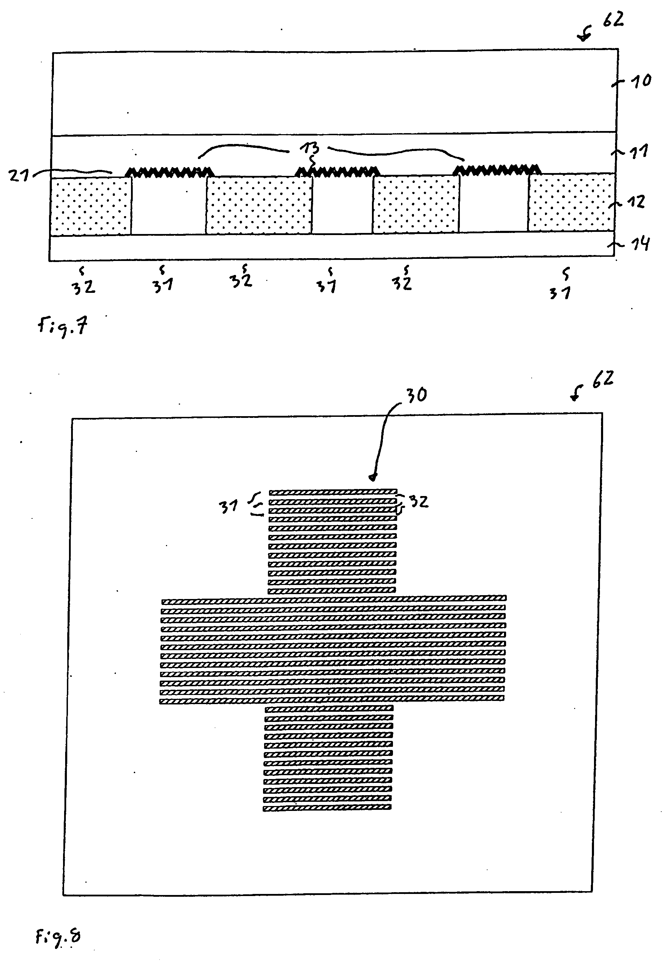

Fig. 7 verdeutlicht nun den Aufbau eines Sicherheitselements 62, welches mit dem oben beschriebenen Verfahren gefertigt worden ist. Das Sicherheitselement 62 weist die Trägerschicht 10, die Replizierschicht 11, die partielle metallische Schicht 13, die Volumenhologrammschicht 12 und eine Kleberschicht 14 auf. Die Kleberschicht 14 kann hierbei auch eingefärbt sein und weist vorzugsweise eine dunkle Körperfarbe auf. Vorzugsweise ist die Kleberschicht 14 hierbei schwarz eingefärbt oder es ist eine schwarze Zwischenschicht zwischen der Volumenhologrammschicht 12 und der Kleberschicht 14 vorgesehen. Auf die Kleberschicht 14 kann auch verzichtet werden oder es können zusätzlich oder anstelle der Kleberschicht 14 noch ein oder mehrere weitere Schichten, beispielsweise eine weitere metallische Schicht und/oder eine Dekorschicht, vorgesehen sein. So ist es beispielsweise auch möglich, dass eine musterförmig ausgeformte Dekorschicht, beispielsweise Farbschicht, auf die Volumenhologrammschicht aufgebracht wird, bevor die Kleberschicht 14 aufgebracht wird. Die Dekorschicht wird hierbei vorzugsweise mittels eines Druckverfahrens, beispielsweise in Form eines Logos oder eines Musters, aufgedruckt. Die Dekorschicht kann auch vor der Applikation des Sicherheitselements 62 auf ein (nicht näher dargestelltes) Substrat aufgebracht werden, vorzugsweise mittels eines Druckverfahrens beispielsweise Offsetdruck, Flexodruck oder Siebdruck, beispielsweise in Form eines Logos oder eines Musters, aufgedruckt werden. Das Sicherheitselement 62 kann dann insbesondere registergenau zu dem Dekor auf dem Substrat appliziert werden.
Das Dekor kann dabei aus herkömmlichen Druckfarben, aber auch aus speziellen Sicherheitsfarben oder Sicherheitstinten bestehen, die insbesondere spezielle, optisch variable Effekte erzeugende Pigmente, zum Beispiel Merck Iriodin Effektpigmente enthalten.
Die metallische Schicht 13 ist in den Zonen 31 des Sicherheitselements 62 vorgesehen und in den Zonen 32 des Sicherheitselements 62 nicht vorgesehen. Wie in Fig. 7 gezeigt, ist in den Zonen 31 weiter die Reliefstruktur 21 abgeformt. In den Bereichen 32 ist die Reliefstruktur durch die Beschichtung mit dem Material der Volumenhologrammschicht ausgelöscht oder erst gar nicht in die Replizierschicht 11 abgeformt, wie dies oben erläutert worden ist. In den Zonen 32 ist ein Volumenhologramm in die Volumenhologrammschicht eingeschrieben, wobei die Bereiche, in denen die Braggschen Ebenen des Volumenhologramms in der Volumenhologrammschicht 12 ausgebildet sind, entsprechend in Fig. 7 gekennzeichnet sind. In den Zonen 31 sind hierbei Bereiche vorgesehen, in denen kein Volumenhologramm in die Volumenhologrammschicht 12 eingeschrieben ist, wie dies bereits oben erläutert worden ist. Durch die mit der metallischen Schicht 13 belegte Reliefstruktur 21 wird in den Bereichen 31 eine erste optisch variable Information bereitgestellt. In den Bereichen 32 wird anstelle dieser ersten Information eine von dieser unterschiedliche zweite optisch variable Information durch das in den Zonen 32 in die Volumenhologrammschicht 12 eingeschriebene Volumenhologramm bereitgestellt. In den Zonen 31 und 32 werden somit unterschiedliche optische Effekte generiert, die ohne einen Grenzbereich unmittelbar nebeneinander generiert werden, sodass keine diese Effekte störenden oder verfälschenden Überlagerungserscheinungen in den Grenzbereichen auftreten.

Weiter ist es möglich, dass die Zonen 31 abwechselnd vorgesehen sind und in zumindest eine Richtung aufeinander folgende erste Zonen weniger als 300 µm voneinander beabstandet sind. Eine derartige Anordnung der Zonen 31 und 32 ist beispielsweise in Fig. 8 verdeutlicht.

Fig. 8 zeigt eine schematische, stark vergrößerte Draufsicht auf einen Bereich des Sicherheitselements 62. In einem Bereich 30 des Sicherheitselements 62 sind die Zonen 31 und 32 gemäß eines regelmäßigen, eindimensionalen periodischen Rasters angeordnet. Die Breite der Zonen 31 liegt im Bereich von etwa 100 µm und die Beabstandung aufeinander folgender Zonen 31 beträgt etwa 240 µm. Die Länge der Zonen 31 ist hier so gewählt, dass der Bereich 30, der diese Anordnung von Zonen 31 und 32 aufweist, musterförmig in Form eines Kreuzes ausgeformt ist. Durch eine derartige Ausgestaltung der Zonen 31 und 32 ergibt sich in dem Bereich 30 für den menschlichen Betrachter ein optisch variabler Eindruck, der sich aus der Überlagerung der ersten und zweiten optisch variablen Information ergibt, beispielsweise einem metallischen Kreuz 31 und einer Zahl 32.

Vielfältige interessante optische Effekte lassen sich auch dadurch erzielen, dass die Zonen 31 und 32 nicht gemäß eines periodischen Rasters angeordnet sind. Vorzugsweise weisen die Zonen 31 hierbei eine Breite von weniger als 300 µm, bevorzugt eine Breite von 150 bis 50 µm auf und sind in Form von dünnen Linien ausgeformt, deren Länge > 300 µm ist. Diese Linien sind weiter in Form komplexer Muster, beispielsweise in Form einer Guilloche oder zur Darstellung einer bildlichen Darstellung, beispielsweise eines Porträts, ausgeformt. Weiter ist es auch möglich, dass die ersten Zonen 31 ein repetitives Muster ausformen, beispielsweise in Form einer sich wiederholenden Zahl oder eines sich wiederholenden Logos.

In einer Variante weist die Replizierschicht nebeneinander angeordnete diffraktive Strukturen, vorzugsweise vollständig oder partiell metallisiert (oder mit anderen Reflexionsschichten partiell belegt) wie oben beschrieben, und Täler einer refraktiven, makroskopischen Struktur auf, welche mit dem Photopolymermaterial 37 verfüllt sind und damit eine partielle Volumenhologrammschicht 12 auszubilden. Wird ein so beschaffener Mehrschichtkörper 52 in der Belichtungsstation 40 mittels dem Laser 44 mit kohärentem Licht 45 und dem Volumenhologramm-Master 41 belichtet und anschließend ausgehärtet, entsteht das Interferenzmuster des Volumenhologramms nur in den Bereichen, in denen das Photopolymermaterial 37 in einer dafür ausreichenden Schichtstärke vorhanden ist. In den anderen Bereichen wird kein Volumenhologramm erzeugt. Dadurch ist es möglich, nebeneinander liegende Bereiche mit metallisierten Reflexionshologrammen registergenau mit benachbart dazu angeordneten Bereichen mit Volumenhologrammen zu kombinieren. Ebenso ist es damit möglich, die partiellen Bereiche, die mit dem Photopolymermaterial 37 verfüllt sind, als Rasterpunkte in einem regelmäßigen oder unregelmäßigen Raster anzuordnen, wobei das Raster vorzugsweise so fein ist, dass es vom menschlichen Auge nicht aufgelöst werden kann. Beispielweise weist ein solches Raster eine Auflösung von 300 dpi (Rasterpunkte pro Inch) oder höher auf. Nur innerhalb dieser Volumenhologrammrasterpunkte wird ein Interferenzmuster des Volumenhologramms erzeugt und damit ein optisch variabler Effekt. Außerhalb der Rasterpunkte ist ein anderer optischer Effekt oder auch kein optischer Effekt als Kontrast sichtbar. Somit ist es möglich, die in dem Volumenhologramm-Master 41 enthaltene Bildinformation nur teilweise in der Volumenhologrammschicht 12 wiederzugeben bzw. die in dem Volumenhologramm-Master 41 enthaltene Bildinformation mit einer weiteren Bildinformation in Gestalt der Ausformung der mit Photopolymermaterial 37 verfüllten Bereiche zu überlagern.

Dies wird im Folgenden noch anhand der Figuren Fig. 9a bis Fig. 11b erläutert.

Fig. 9a zeigt einen Folienkörper 91 mit der Trägerschicht 10 und der Replizierschicht 11, welche wie oben anhand der Figuren Fig. 1a bis Fig. 8 beschrieben ausgebildet sind. In die Replizierschicht 11 ist hierbei eine Reliefstruktur 22 abgeformt, welche in ersten Regionen 71 eine Relieftiefe von mehr als 10 µm, vorzugsweise zwischen 20 und 50 µm, aufweist und in zweiten Regionen 72 eine Relieftiefe von weniger als 1 µm, in diesem Ausführungsbeispiel eine Relieftiefe von 0, aufweist.

Auf die Unterseite des Folienkörpers 91 wird sodann ein in flüssiger Form vorliegendes Fotopolymer als Volumenhologramm-Material - wie oben beispielsweise in den Ausführungsbeispielen nach Fig. 1a bis Fig. 8 beschrieben - aufgebracht. Als Volumenhologramm-Material kann ein Fotopolymer entsprechend dem oben beschriebenen Fotopolymer 37 verwendet werden. Beispielsweise wird das Volumenhologramm-Material mittels eines Rakels in die Vertiefungen der Reliefstruktur eingerakelt, so dass sich der in Fig. 9b gezeigte Folienkörper ergibt, bei dem die Reliefstruktur 22 in den Regionen 71 mit dem Volumenhologramm-Material verfüllt ist. Es ist jedoch auch möglich, auf das Einrakeln des Volumenhologramm-Materials zu verzichten, wenn das Volumenhologramm-Material entsprechend dünnflüssig gewählt wird, sodass das Volumenhologramm-Material nach dem Aufbringen weitgehend selbstständig in die Vertiefungen eindringt, insbesondere fließt. Weiter ist es auch möglich, dass das Volumenhologramm-Material nicht nur in den Regionen 71, sondern auch in den Regionen 72 vorliegt, wobei hier wesentlich ist, dass die Schichtdicke der so vorliegenden Volumenhologramm-Schicht in den Regionen 71 mindestens 10 µm dicker als in den Regionen 72 ist.

Anschließend wird, wie beispielsweise vorhergehend anhand der Figuren Fig. 1a bis Fig. 8 beschrieben, ein Volumenhologramm in die partiell in den Regionen 71 vorliegende Volumenhologramm-Schicht 12 eingeschrieben und das Volumenhologramm-Material der Volumenhologramm-Schicht 12 sodann ausgehärtet und so das Volumenhologramm fixiert. Bezüglich der Details dieses Teils des Verfahrens wird auf die Ausführungen zu den Figuren Fig. 1a bis Fig. 8 verwiesen, d.h. dieser Teil des Verfahrens wird entsprechend wie in Bezug auf die Figuren Fig. 1a bis Fig. 8 beschreiben durchgeführt.

Die Reliefstruktur 22 weist in den Regionen 71 beispielsweise eine Relieftiefe zwischen 10 und 50 µm, weiter bevorzugt zwischen 15 und 40 µm, auf. Die Breite der Region 71, d.h. deren kleinste Abmessung, beträgt bespielsweise mehr als 20 µm. Die Regionen 71 können entsprechend den Zonen 32 nach Fig. 2 bis Fig. 8 ausgeformt sein. Weiter ist es auch möglich, dass die Zonen 72 so gewählt werden, dass deren kleinste Abmessung kleiner als 400 µm, bevorzugt kleiner als 200 µm, ist und dass der Flächenanteil der Zonen 71 im Bereich des Volumenhologramms variiert wird, um so zusätzlich die sich dem Betrachter zeigende Helligkeit des Volumenhologramms zusätzlich zu variieren. Hierbei ist es zum einen möglich, dass die Regionen 71 weitgehend gleichförmig ausgebildet sind, beispielsweise die Form eines Punktes oder eines Vielecks besitzen, und die Beabstandung der Region 71 voneinander lokal variiert ist, wodurch sich in benachbarten Bereichen eine unterschiedliche Flächenbelegung der Bereiche durch die Regionen 71 ergibt. Weiter ist es auch möglich, dass die Regionen 71 in einem regelmäßigen Raster angeordnet sind und die Regionen 71 in ihrer Größer variieren, d.h. die von diesen belegte Fläche variiert.

Weiter ist es auch möglich, dass die Regionen 71 in Form dünnen Linien ausgebildet sind, deren Linienbreite im Bereich zwischen 20 µm und 400 µm, vorzugsweise 75 µm bis 200 µm, besonders bevorzugt zwischen 30 µm bis 60 µm liegt. Durch eine derartige Ausgestaltung der Regionen 71 lässt sich ein nur schwer nachahmbares Sicherheitselement schaffen. Ein solches Sicherheitselement ist nicht durch das partielle Einschreiben eines Volumenhologramms nacharbeitbar und lässt sich aufgrund der üblichen Eigenschaften von Volumenhologramm-Material auch nicht mittels Druckverfahren usw. erzielen, so dass ein eindrucksvolles und nur sehr schwer nachahmbares Sicherheitsmerkmal bereitgestellt wird. Beispielsweise stellen die feinen Linien hierbei eine bildliche Information, beispielsweise ein Porträt oder einen Zahlencode dar. Es ist weiter auch vorteilhaft, die Linien in Form eines Sicherheits-Musters, beispielsweise in Form einer Guilloche oder eines Moiré-Musters auszubilden.

Fig. 10a bis Fig. 10c verdeutlichen die Herstellung eines weiteren Sicherheitselements.

Fig. 10a zeigt einen Folienkörper 93, welcher die Trägerschicht 10 und die Replizierschicht 11 aufweist. In die Replizierschicht 11 ist eine Reliefstruktur 23 abgeformt. Die Reliefstruktur 23 unterscheidet sich von der Reliefstruktur 22 nach Fig. 9a dadurch, dass in den Regionen 72 Strukturelemente mit einer Relieftiefe von weniger als 2 µm, insbesondere weniger als 1 µm abgeformt sind, welche geeignet sind, einen optisch variablen Effekt zu generieren. Die Reliefstruktur in den Regionen 72 bilden so beispielsweise eine Reliefstruktur aus, welche wie die Reliefstruktur 20 und/oder 21 nach Fig. 2 bis Fig. 8 ausgebildet ist.

Sodann wird die mit der Reliefstruktur 23 versehene Oberfläche der Replizierschicht 11 in einem Teil der Regionen 72 oder in Teilregionen der Regionen 72 mit einer metallischen Schicht, der Metallschicht 13, versehen, die so in Zonen 31 vorliegt und in Zonen 32 nicht vorliegt, wie bereits oben anhand der Figuren Fig. 2 bis Fig. 8 erläutert.

Dies kann dadurch realisiert werden, dass die Metallschicht 13 mittels einer Bedampfungsmaske lediglich in den Regionen 72 aufgebracht wird oder dass die Oberfläche der Reliefstruktur 23 vollflächig mit einer metallischen Schicht versehen wird und die Metallschicht sodann in den Regionen 71 und in den Regionen 72 wieder entfernt wird, in denen die durch die Strukturelemente gebildete Feinstruktur nicht vorgesehen ist.

Dies kann beispielsweise durch Aufdrucken eines Ätzmittels/Ätzresists erfolgen.

Es ergibt sich somit ein Folienkörper 94, bei dem in den Regionen 71 die metallische Schicht 13 nicht vorgesehen, und in allen oder einem Teil der Regionen 72 oder in Teilregionen der Regionen 72 die metallische Schicht 13 vorgesehen ist.

Anschließend wird auf die Unterseite des Folienkörpers 94, d.h. die mit der partiellen Metallschicht versehene Seite des Folienkörpers 94, das Volumenhologramm-Material, wie bereits oben anhand von Fig. 9b erläutert, aufgebracht, ein Volumenhologramm eingeschrieben und das Volumenhologramm-Material vernetzt, so dass sich der in Fig. 10c gezeigte Folienkörper ergibt. Dieser Folienkörper zeigt dasselbe optische Erscheinungsbild wie beispielsweise der Folienkörper nach Fig. 7a und Fig. 8 mit dem Unterschied, dass in den Zonen 32 die Lichtstärke des Volumenhologramms zusätzlich durch die Ausgestaltung der Regionen 71 variiert ist, wie oben erläutert.

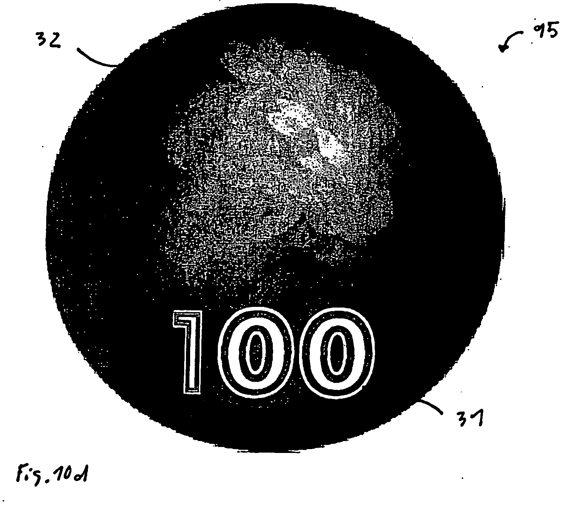

So zeigt Fig. 10d beispielhaft ein mögliches optisches Erscheinungsbild des Folienkörpers 95, bei dem sich in einer mit Fotopolymer beschichteten Zone 32 ein Volumenhologramm mit variierender Lichtstärke in Form eines Portraits zeigt und sich in einer von Fotopolymer freien Zone 31, die als Lücken in der Zone 32 ausgebildet sind, ein in Form der Ziffern "100" ausgeformten Kinegram^{®} mit Pumpkonturen zeigt. Durch die mit demselben Volumenhologramm-Master erzeugten Strukturen zur Ausbildung der Zonen 31 und 32 ist das Kinegram^{®} in der Zone 31 registergenau und wie in Fig. 10d gezeigt eng benachbart und mit gleichmäßigem Abstand zu dem Rand der Zone 32 angeordnet, was schwer nachahmbar ist und ein schwer fälschbares Sicherheitselement ergibt.
Die Zone 32 mit Volumenhologramm kann dabei, wie oben beschrieben, aus einem Raster kleiner Regionen mit Fotopolymer bestehen, das heißt aus rasterförmig partiell aufgebrachten Fotopolymer, wobei die lokale Rasterweite den lokalen Helligkeitswert des Volumenhologramms ergibt. Ebenso ist es möglich, dass die Zone 32 mit Volumenhologramm aus in dieser Zone 32 vollflächig aufgebrachten Fotopolymer besteht, in welches ein Motiv einbelichtet ist.

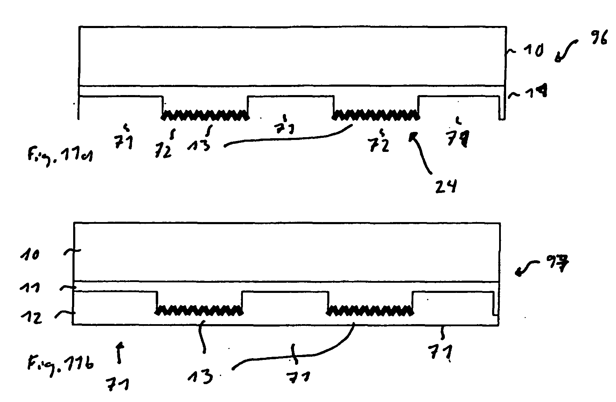

Eine weitere Möglichkeit der Herstellung eines Folienkörpers wird im Folgenden anhand der Figuren Fig. 11a und Fig. 11b erläutert.

Fig. 11a zeigt einen Folienkörper 96 mit der Trägerschicht 11 und der Replizierschicht 13. Der Folienkörper 96 ist wie der Folienkörper 91 nach Fig. 9a aufgebaut mit dem Unterschied, dass in die Unterseite der Replizierschicht 11 anstelle der Reliefstruktur 22 eine Reliefstruktur 24 abgeformt ist und sämtliche Regionen 72 mit der metallischen Schicht 13 belegt sind. Die Reliefstruktur 24 ist wie die Reliefstruktur 23 nach Fig. 10a ausgebildet mit dem Unterschied, dass sämtliche Regionen 72 mit Strukturelementen belegt sind, welche eine optisch variable Information generieren. Dies ist jedoch nicht zwingend. Zur Herstellung der partiellen Metallschicht 13 werden hierbei vorzugsweise folgende Verfahren eingesetzt: Die Unterseite der Replizierschicht 13 mit der Reliefstruktur 24 wird vollflächig mit einer metallischen Schicht beschichtet, beispielsweise durch Aufdampfen und Aufsputtern. Anschließend wird mittels einer Druckwalze ein Ätzresist aufgebracht. Aufgrund der relativ hohen Differenz in der Relieftiefe zwischen den Regionen 71 und 72 benetzt die Druckwalze lediglich die "erhabenen" Regionen 72 mit dem Ätzresist, so dass der Ätzresist ohne zusätzliche Maßnahme passergenau auf die Regionen 72 aufgebracht wird. Anschließend wird die Metallschicht in den nicht von einem Ätzresist geschützten Bereich in einem Ätzprozess entfernt. Weiter ist es auch möglich, dass die relativ große Differenz der Relieftiefe in den Regionen 71 und 72 dahingehend ausgenutzt wird, dass ein Ätzmittel aufgebracht und in die Regionen 71 eingerakelt wird, so dass die Metallschicht durch das Ätzmittel in den Regionen 71, nicht jedoch in den Regionen 72, entfernt wird.

In den Fig. 10b, 10c und 11a, 11b ist jeweils der Fall dargestellt, in welchem die Reliefstruktur 23, 24 vollständig mit der Metallschicht 13 bedeckt ist. Ebenso ist es möglich, dass die Metallschicht 13 die Reliefstruktur 23, 24 nur teilweise bedeckt, beispielsweise in Form eines flächigen Rasters oder als partielle Metallschicht 13 im Register zu einem abgeformten Design in der Reliefstruktur 23, 24.

Anschließend wird der Folienkörper 96, wie oben gemäß Fig. 9b erläutert, mit einem Volumenhologramm-Material beschichtet, ein Volumenhologramm in die so gebildete Volumenhologrammschicht eingeschrieben und das Volumenhologramm-Material sodann ausgehärtet und das Volumenhologramm so fixiert. So ergibt sich der Folienkörper 97. Wie bereits oben angemerkt, ist es hierbei nicht erforderlich, dass die Volumenhologrammschicht 12 in den Regionen 72 nicht vorliegt. Wie in Fig. 11b gezeigt, ist es ausreichend, wenn die Volumenhologrammschicht 12 in den Regionen 72 eine Schichtdicke von vorzugsweise weniger als 5 µm aufweist.

## Patentansprüche

1. Sicherheitselement (62) in Form eines mehrschichtigen Folienkörpers, insbesondere Laminierfolie oder Transferfolie, mit einer dem Betrachter zuzuwendenden Oberseite, wobei das Sicherheitselement (62) eine Volumenhologrammschicht (12) aufweist, in der ein Volumenhologramm aufgezeichnet ist, welches eine erste optisch variable Information bereitstellt,
wobei das Sicherheitselement (62) eine Replizierschicht (11) aufweist, in deren Oberfläche eine eine zweite optisch variable Information bereitstellende Reliefstruktur (20, 21) abgeformt ist und die oberhalb der. Volumenhologrammschicht (12) angeordnet ist und wobei zwischen der Volumenhologrammschicht (12) und der Replizierschicht (11) eine partielle metallische Schicht (13) angeordnet ist, wobei in ein oder mehreren ersten Zonen (31) des Sicherheitselements die metallische Schicht (13) vorgesehen ist und in ein oder mehreren zweiten Zonen (32) des Sicherheitselements die metallische Schicht nicht vorgesehen ist
**dadurch gekennzeichnet, dass**
das Volumenhologramm durch die als Belichtungsmaske fungierende partielle metallische Schicht in der Volumenhologrammschicht eingeschrieben ist.

2. Sicherheitselement (62) nach Anspruch 1,
**dadurch gekennzeichnet,**
**dass** die Reliefstruktur (20, 21) in die Unterseite der Replizierschicht (11) abgeformt ist, dass in den ersten Zonen (31) eine erste Oberfläche der metallischen Schicht (13) an die Replizierschicht (11) angrenzt und eine der ersten Oberfläche gegenüberliegende zweite Oberfläche der metallischen Schicht an die Volumenhologrammschicht (12) angrenzt und dass in den zweiten Zonen (32) die Replizierschicht (11) an die Volumenhologrammschicht (12) angrenzt.

3. Sicherheitselement nach einem der vorhergehenden Ansprüche,
**dadurch gekennzeichnet,**
**dass** der Brechungsindexunterschied zwischen dem Material der Replizierschicht (11) und dem an der Oberseite der Volumenhologrammschicht (12) vorgesehenen Material weniger als 0,2 beträgt.

4. Sicherheitselement nach einem der vorhergehenden Ansprüche,
**dadurch gekennzeichnet,**
**dass** das Material und die Schichtdicke der metallischen Schicht (13) so gewählt ist, dass der Opazitätsgrad der metallischen Schicht größer als 80% ist.

5. Sicherheitselement nach einem der vorhergehenden Ansprüche,
**dadurch gekennzeichnet,**
**dass** die ein oder mehreren ersten oder zweiten Zonen (31, 32) musterförmig zur Ausbildung einer dritten Information ausgeformt sind.

6. Sicherheitselement (62) nach einem der Ansprüche 1 bis 4,
**dadurch gekennzeichnet,**
**dass** in einem ersten Bereich (30) des Sicherheitselements abwechselnd erste und zweite Zonen (31, 32) vorgesehen sind, wobei in zumindest eine Richtung aufeinander folgende erste Zonen (31) weniger als 300 µm voneinander beabstandet sind.

7. Sicherheitselement nach Anspruch 6,
**dadurch gekennzeichnet,**
**dass** das Verhältnis der mittleren Breite der ersten Zonen zu dem Verhältnis der mittleren Breite der zweiten Zonen in dem ersten Bereich zwischen 0,75:1 und 1:5 beträgt.

8. Sicherheitselement nach einem der Ansprüche 6 bis 7,
**dadurch gekennzeichnet,**
**dass** die ersten und zweiten Zonen (31, 32) gemäß eines regelmäßigen, ein- oder zweidimensionalen Rasters angeordnet sind.

9. Sicherheitselement (62) nach einem der Ansprüche 6 bis 8,
**dadurch gekennzeichnet,**
**dass** der erste Bereich (30) eine kleinste Abmessung von mehr als 300 µm aufweist und musterförmig zur Ausbildung einer vierten Information ausgeformt ist.

10. Sicherheitselement nach einem der vorhergehenden Ansprüche,
**dadurch gekennzeichnet,**
**dass** zwei oder mehr Informationen aus der Gruppe erste, zweite, dritte und vierte Informationen sich ergänzende Informationen darstellen.

11. Sicherheitselement nach einem der vorhergehenden Ansprüche,
**dadurch gekennzeichnet,**
**dass** die Reliefstruktur (21) nur in den ersten Zonen (31), nicht jedoch in den zweiten Zonen (32) in die Replizierschicht (11) abgeformt ist.

12. Verfahren zur Herstellung eines Sicherheitselements (62) in Form eines mehrschichtigen Folienkörpers, insbesondere einer Laminierfolie oder Transferfolie, mit einer dem Betrachter zuzuwendenden Oberseite,
wobei ein Mehrschichtkörper (51) umfassend eine partielle metallische Schicht (13) und eine Replizierschicht (11) bereitgestellt wird, wobei in einer Oberfläche der Replizierschicht eine eine zweite optisch variable Information bereitstellende Reliefstruktur (20) abgeformt ist und in ein oder mehreren ersten Zonen (31) des Sicherheitselements die metallische Schicht (13) vorgesehen ist und in ein oder mehreren zweiten Zonen (32) des Sicherheitselements die metallische Schicht (13) nicht vorgesehen ist, wobei auf der näher zur metallischen Schicht als zur Replizierschicht liegenden Oberfläche des Mehrschichtfolienkörpers (51) eine Volumenhologrammschicht (12) aufgebracht wird, sodass die partielle metallische Schicht (13) zwischen der Volumenhologrammschicht (12) und der Replizierschicht (11) angeordnet ist,**dadurch gekennzeichnet, dass**
die Volumenhologrammschicht (12) von der der Volumenhologrammschicht abgewandten Seite des Mehrschichtkörpers her durch die partielle metallische Schicht (13) hindurch zur Aufzeichnung eines Volumenhologramms in der Volumenhologrammschicht (12) mit kohärentem Licht (45) belichtet wird.

13. Verfahren nach Anspruch 12,
**dadurch gekennzeichnet,**
**dass** bei der Belichtung ein Volumenhologramm-Master unter der Volumenhologrammschicht angeordnet wird.

14. Verfahren nach Anspruch 12,
**dadurch gekennzeichnet,**
**dass** der Mehrschichtkörper bei der Belichtung über eine Walze geführt wird, in deren Mantelfläche ein einen Volumenhologramm-Master ausbildendes Oberflächenrelief abgeformt ist.

15. Verfahren nach Anspruch 12,
**dadurch gekennzeichnet,**
**dass** die Belichtung des Volumenhologramm-Masters mittels zwei oder mehreren Laser (44a, 44b,44c) erfolgt, wodurch eine mehrfarbiges Volumenhologramm als Volumenhologramm (11) in die Volumenhologrammschicht aufgezeichnet wird, wobei insbesondere die von den zwei oder mehreren Lasern generierten Lichtstrahlen (45a, 45b) unter unterschiedlichen Einfallswinkeln auf die Volumenhologrammschicht (11) auftreffen oder das von den zwei oder mehreren Lasern (44a, 44c) erzeugte Licht mittels eines Kopplers (445) in einem Lichtstrahl (45) gekoppelt wird, mit welchem die Volumenhologrammschicht (11) belichtet wird.

## Claims

1. Security element (62) in the form of a multilayer film body, in particular a laminating film or transfer film, having an upper side facing the observer, wherein the security element (62) has a volume hologram layer (12) in which a volume hologram is recorded, said volume hologram providing a first optically variable piece of information, wherein the security element (62) has a replicating layer (11), in the surface of which a relief structure (20, 21) providing a second optically variable piece of information is moulded and which is arranged above the volume hologram layer (12), and wherein a partial metallic layer (13) is arranged between the volume hologram layer (12) and the replicating layer (11), wherein the metallic layer (13) is provided in one or more first zones (31) of the security element and the metallic layer is not provided in one or more second zones (32) of the security element,
**characterised in that**
the volume hologram is inscribed in the volume hologram layer by the partial metallic layer functioning as an exposure mask.

2. Security element (62) according to claim 1,
**characterised in that**
the relief structure (20, 21) is moulded into the underside of the replicating layer (11), a first surface of the metallic layer (13) adjoins the replicating layer (11) in the first zones (31), and a second surface of the metallic layer located opposite the first surface adjoins the volume hologram layer (12) and the replicating layer (11) adjoins the volume hologram layer (12) in the second zones (32).

3. Security element according to one of the preceding claims,
**characterised in that**
the difference in refractive index between the material of the replicating layer (11) and the material provided on the upper side of the volume hologram layer (12) is less than 0.2.

4. Security element according to one of the preceding claims,
**characterised in that**
the material and the layer thickness of the metallic layer (13) is selected in such a way that the degree of opacity of the metallic layer is greater than 80%.

5. Security element according to one of the preceding claims,
**characterised in that**
the one or more first or second zones (31, 32) are formed in a patterned manner for the formation of a third piece of information.

6. Security element (62) according to one of claims 1 to 4,
**characterised in that**
first and second zones (31, 32) are provided alternatingly in a first region (30) of the security element, wherein successive first zones (31) are spaced apart from one another by less than 300µm in at least one direction.

7. Security element according to claim 6,
**characterised in that**
the ratio of the average width of the first zones to the average width of the second zones in the first region is between 0.75:1 and 1:5.

8. Security element according to one of claims 6 to 7,
**characterised in that**
the first and second zones (31, 32) are arranged in accordance with a regular, one- or two-dimensional grid.

9. Security element (62) according to one of claims 6 to 8,
**characterised in that**
the first region (30) has a smallest dimension of greater than 300µm and is formed in a patterned manner for the formation of a fourth piece of information.

10. Security element according to one of the preceding claims,
**characterised in that**
two or more pieces of information from the group of first, second, third and fourth pieces of information represent complementary pieces of information.

11. Security element according to one of the preceding claims,
**characterised in that**
the relief structure (21) is only moulded into the replicating layer (11) in the first zones (31), but not in the second zones (32).

12. Method for the production of a security element (62) in the form of a multilayer film body, in particular a laminating film or transfer film, having an upper side facing the observer, wherein a multilayer body (51) comprising a partial metallic layer (13) and a replicating layer (11) is provided, wherein a relief structure (20) providing a second optically variable piece of information is moulded in a surface of the replicating layer and the metallic layer (13) is provided in one or more first zones (31) of the security element and the metallic layer (13) is not provided in one or more second zones (32) of the security element, wherein a volume hologram layer (12) is applied to the surface of the multilayer film body (51) that is located closer to the metallic layer than the replicating layer, such that the partial metallic layer (13) is arranged between the volume hologram layer (12) and the replicating layer (11),
**characterised in that**
the volume hologram layer (12) is exposed with coherent light (45) from the side of the multilayer body facing away from the volume hologram layer through the partial metallic layer (13) for the recording of a volume hologram in the volume hologram layer (12).

13. Method according to claim 12,
**characterised in that**
during the exposure, a volume hologram master is arranged beneath the volume hologram layer.

14. Method according to claim 12,
**characterised in that**
during the exposure, the multilayer body is guided over a roller, in the shell surface of which a surface relief forming a volume hologram master is moulded.

15. Method according to claim 12,
**characterised in that**
the exposure of the volume hologram master takes place by means of two or more lasers (44a, 44b, 44c), whereby a multi-coloured volume hologram is recorded in the volume hologram layer as the volume hologram (11), wherein the beams of light (45a, 45b) generated by the two or more lasers in particular strike the volume hologram layer (11) at different angles of incidence or the light generated by the two or more lasers (44a, 44c) are coupled in a beam of light (45) by means of a coupler (445), with which beam of light the volume hologram layer (11) is exposed.

## Revendications

1. Elément de sécurité (62) sous la forme d'un corps pelliculaire multicouche, en particulier d'un film de laminage ou d'un film de transfert, comprenant une face supérieure à tourner vers l'observateur, sachant que l'élément de sécurité (62) présente une couche à hologramme en volume (12), dans laquelle un hologramme en volume est gravé, lequel fournit une première information à variation optique,
sachant que l'élément de sécurité (62) présente une couche de réplication (11), dans la surface de laquelle une structure en relief (20, 21) fournissant une deuxième information à variation optique est moulée et qui est disposée au-dessus de la couche à hologramme en volume (12), et sachant qu'une couche (13) métallique partielle est disposée entre la couche à hologramme en volume (12) et la couche de réplication (11), sachant que la couche métallique (13) est prévue dans une ou plusieurs premières sections (31) de l'élément de sécurité et que la couche métallique n'est pas prévue dans une ou plusieurs deuxièmes sections (32) de l'élément de sécurité, **caractérisé en ce que** l'hologramme en volume est inscrit dans la couche à hologramme en volume à travers la couche métallique partielle faisant office de masque d'exposition.

2. Elément de sécurité (62) selon la revendication 1,
**caractérisé en ce**
**que** la structure en relief (20, 21) est moulée dans la face inférieure de la couche de réplication (11), en ce qu'une première surface de la couche métallique (13) est adjacente, dans les premières sections (31), à la couche de réplication (11) et qu'une deuxième surface, faisant face à la première surface, de la couche métallique est adjacente à la couche à hologramme en volume (12), et en ce que la couche de réplication (11) est adjacente, dans les deuxièmes sections (32), à la couche à hologramme en volume (12).

3. Elément de sécurité selon l'une quelconque des revendications précédentes,
**caractérisé en ce**
**que** la différence en matière d'indice de réfraction entre le matériau de la couche de réplication (11) et le matériau prévu au niveau de la face supérieure de la couche à hologramme en volume (12) présente une valeur inférieure à 0,2.

4. Elément de sécurité selon l'une quelconque des revendications précédentes,
**caractérisé en ce**
**que** le matériau et l'épaisseur de couche de la couche métallique (13) sont choisis de telle sorte que le degré d'opacité de la couche métallique est supérieur à 80 %.

5. Elément de sécurité selon l'une quelconque des revendications précédentes,
**caractérisé en ce**
**que** l'une ou plusieurs des premières et deuxièmes sections (31, 32) sont formées de manière à présenter une forme de motif afin de réaliser une troisième information.

6. Elément de sécurité (62) selon l'une quelconque des revendications 1 à 4,
**caractérisé en ce**
**que** sont prévues en alternance, dans une première zone (30) de l'élément de sécurité, des premières et deuxièmes sections (31, 32), sachant que des premières sections (31) se suivant les unes les autres dans au moins une direction sont espacées les unes des autres d'une distance inférieure à 300 µm.

7. Elément de sécurité selon la revendication 6,
**caractérisé en ce**
**que** le rapport de la largeur moyenne des premières sections par rapport de la largeur moyenne des deuxièmes sections dans la première zone est compris entre 0,75:1 et 1:5.

8. Elément de sécurité selon l'une quelconque des revendications 6 à 7,
**caractérisé en ce**
**que** les premières et deuxièmes sections (31, 32) sont disposées selon une trame régulière à une ou à deux dimensions.

9. Elément de sécurité (62) selon l'une quelconque des revendications 6 à 8,
**caractérisé en ce**
**que** la première zone (30) présente une dimension la plus petite supérieure à 300 µm et est formée de manière à présenter une forme de motif afin de réaliser une quatrième information.

10. Elément de sécurité selon l'une quelconque des revendications précédentes,
**caractérisé en ce**
**que** deux informations ou plus issues du groupe comprenant des premières, deuxièmes, troisièmes et quatrièmes informations représentent des informations se complétant.

11. Elément de sécurité selon l'une quelconque des revendications précédentes,
**caractérisé en ce**
**que** la structure en relief (21) est moulée uniquement dans les premières sections (31), en revanche pas dans les deuxièmes sections (32), dans la couche de réplication (11).

12. Procédé servant à fabriquer un élément de sécurité (62) sous la forme d'un corps pelliculaire multicouche, en particulier d'un film de laminage ou d'un film de transfert, comprenant une face supérieure à tourner vers l'observateur,
sachant qu'un corps multicouche (51) comprenant une couche (13) métallique partielle et une couche de réplication (11) est fourni, sachant qu'une structure en relief (20) fournissant une deuxième information à variation optique est moulée dans une surface de la couche de réplication et que la couche (13) métallique est prévue dans une ou plusieurs des premières sections (31) de l'élément de sécurité et que la couche (13) métallique n'est pas prévue dans une ou plusieurs deuxièmes sections (32) de l'élément de sécurité, sachant qu'une couche à hologramme en volume (12) est appliquée sur la surface, située davantage à proximité de la couche métallique que de la couche de réplication, du corps pelliculaire multicouche (51) de sorte que la couche (13) métallique partielle est disposée entre la couche à hologramme en volume (12) et la couche de réplication (11), **caractérisé en ce que** la couche à hologramme en volume (12) est exposée à une lumière cohérente (45) depuis la face, opposée à la couche à hologramme en volume, du corps multicouche à travers la couche (13) métallique partielle, afin de graver un hologramme en volume dans la couche à hologramme en volume (12).

13. Procédé selon la revendication 12,
**caractérisé en ce**
**qu'**un hologramme en volume principal est disposé sous la couche à hologramme en volume lors de l'exposition à la lumière.

14. Procédé selon la revendication 12,
**caractérisé en ce**
**que** le corps multicouche est guidé, lors de l'exposition à la lumière, sur un cylindre, dans la surface extérieure duquel est moulé un relief de surface réalisant un hologramme en volume principal.

15. Procédé selon la revendication 12,
**caractérisé en ce**
**que** l'exposition à la lumière de l'hologramme en volume principal est effectuée au moyen de deux lasers (44a, 44b, 44c) ou plus, ce qui permet d'inscrire un hologramme en volume en couleur en tant qu'hologramme en volume (11) dans la couche à hologramme en volume, sachant en particulier que les rayons de lumière (45a, 45b) générés par les deux lasers ou plus rencontrent la couche à hologramme en volume (11) selon différents angles d'incidence ou que la lumière produite par les deux lasers (44a, 44c) ou plus est couplée au moyen d'un coupleur (445) dans un rayon de lumière (45), auquel la couche à hologramme en volume (11) est exposée.
